(19)

Europäisches Patentamt
European Patent Office
Office européen des brevets

(11)  **EP 2 605 572 A1**

(12)  **EUROPEAN PATENT APPLICATION**
published in accordance with Art. 153(4) EPC

(43) Date of publication:
**19.06.2013 Bulletin 2013/25**

(21) Application number: **11816063.9**

(22) Date of filing: **19.07.2011**

(51) Int Cl.:
*H04W 16/32* (2009.01)

(86) International application number:
**PCT/CN2011/077328**

(87) International publication number:
**WO 2012/019504 (16.02.2012 Gazette 2012/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.08.2010 CN 201010253271**

(71) Applicant: **ZTE Corporation
Shenzhen, Guangdong 518057 (CN)**

(72) Inventors:
• **DIAO, Xinxi**
  **Shenzhen**
  **Guangdong 518057 (CN)**
• **LAI, Zhengrong**
  **Shenzhen**
  **Guangdong 518057 (CN)**
• **XU, Ling**
  **Shenzhen**
  **Guangdong 518057 (CN)**

• **ZHU, Xiaodong**
  **Shenzhen**
  **Guangdong 518057 (CN)**
• **YANG, Guang**
  **Shenzhen**
  **Guangdong 518057 (CN)**
• **MA, Zhifeng**
  **Shenzhen**
  **Guangdong 518057 (CN)**
• **ZHANG, Li**
  **Shenzhen**
  **Guangdong 518057 (CN)**
• **ZHANG, Junfeng**
  **Shenzhen**
  **Guangdong 518057 (CN)**

(74) Representative: **Zimmermann, Tankred Klaus et al
Schoppe, Zimmermann, Stöckeler
Zinkler & Partner
P.O. Box 246
82043 Pullach (DE)**

(54)  **RECONFIGURABLE WIRELESS NODE AND METHOD OF COORDINATING OPERATIONS WITH MACROCELL WIRELESS ACCESS NODE**

(57)   The present invention provides a reconfigurable wireless node, comprising: a first communication device, a second communication device, and a co-axial cable providing an analog channel and a digital channel for communications between the first communication device and the second communication device, wherein the analog channel is configured to transmit a Radio Frequency (RF) signal from a receiving antenna of the first communication device to a sending antenna of the second communication device by an RF direct amplification method, or transmit the RF signal from a receiving antenna of the second communication device to a sending antenna of the first communication device by an RF direct amplification method; the digital channel is configured to transmit control information and data from the first communication device to the second communication device, or from the second communication device to the first communication device. The present invention also provides a method for a reconfigurable wireless node to collaborate with a wireless access point of a macro cell. The present invention reduces the variety of hardware platforms, reduces the manufacturing and maintenance cost of a product, and avoids the interference of a wireless node of a micro cell on a macro cell.

Fig. 1

EP 2 605 572 A1

## Description

## Field of the Invention

The present invention relates to the field of wireless communications, and in particular to a reconfigurable wireless node and a method for a reconfigurable wireless node to collaborate with a wireless access point of a macro cell.

## Background of the Invention

At present, in a discussion of a Long Term Evolution (LTE) standard of the 3rd Generation Partnership Project (3GPP), an analog Radio Frequency (RF) repeater, a digital relay and a home NodeB are discussed as independent research subjects based on different application scenes thereof. However, in the aspect of the design of an actual commercial product, in order to reduce the variety of the product and to simplify the implementation mode of the product, a uniform implementation architecture is needed, so that software and hardware resources can be shared between different application scenes and operation modes, and design, manufacturing and maintenance costs of equipment can be reduced.

Another product form prevalently concerned by the industry for implementing a micro cell coverage or a hotspot coverage is a wireless gateway. The wireless gateway provides a technical approach for a data transmission between systems with different wireless technologies, and also provides a technical approach for flexibly implementing the wireless coverage and flexibly utilizing the frequency spectrum.

Existing technologies of the RF repeater, the digital relay, the home NodeB and the wireless gateway are as follows.

A Chinese patent with an application number of 200620137568.9 discloses a wireless gateway device, which comprises a local network interface, a wireless interface and a controller, wherein the controller is respectively coupled with the local network interface and the wireless interface. The controller provides the data communication between the data received by the local network interface and the data received by the wireless interface. The wireless interface comprises an Ethernet connection module, a Code Division Multiple Access (CDMA) connection module, a Wireless Fidelity (Wi-Fi) connection module and a Bluetooth connection module, wherein the Ethernet connection module, the CDMA connection module, the Wi-Fi connection module and the Bluetooth connection module are respectively coupled with the controller and transmit received information to the controller. The device meets the requirement that the wireless gateway device needs to support data sharing between the Ethernet and other functions such as the CDMA connection, the Wi-Fi connection, the Bluetooth connection and the like.

A Chinese patent with an application number of 200920137896.2 discloses a wireless gateway based on an extension of an intelligent mobile phone. The wireless gateway comprises a data transmission interface, a processor and a Wireless Local Area Network (WLAN) module, wherein the data transmission interface is configured to perform a high-speed data transmission with the intelligent mobile phone; the processor is coupled with the data transmission interface and is configured to process the high-speed data transmission with the intelligent mobile phone and perform a network protocol conversion between a mobile communication access network and a broadband wireless local area network; and the WLAN module is coupled with the processor. Through the gateway or a wireless router adapter, the intelligent mobile phone can be extension to serve as a wireless gateway or a wireless router from the mobile communication network to the WLAN, so as to provide a WLAN access for terminals such as a laptop, a desktop and the like and share a wireless broadband access of the mobile communication network of the intelligent mobile phone.

An American patent with an application number of US20040185777A1 discloses a portable wireless gateway, which comprises at least one access point operative to communicate with user devices, a transceiver operative to communicate with a network; and a protocol emulator. The protocol emulator is operative to encapsulate user device data relayed by the at least one access point to prepare the user device data for transmission by the transceiver. The encapsulation comprises making the data compatible with a protocol associated with a network with which the transceiver communicates. The protocol emulator is also operative to unpack data from the network relayed by the transceiver. The transceiver comprises a radio transceiver operative to communicate with a public mobile data network, a wireless terminal based broadband communication link, a Universal Mobile Telecommunications System (UMTS) based transceiver, a CDMA 2000 based transceiver, a fixed wireless based communications link, or any other wired or wireless transceiver. The at least one access point comprises: an Institute of Electrical and Electronics Engineers (IEEE) 802.11 access point, a Bluetooth access point, a UMTS NodeB access point, a Universal Serial Bus (USB) access point and a cellular wireless access point. The protocol emulator is operative to coordinate resources of a wireless access point. The protocol emulator can comprise a queuing management unit and an administration and maintenance module operative to perform billing and security functions. The transceiver can serve as an access point for a cellular wireless device; the protocol gateway and the transceiver relay traffic of a cellular wireless terminal to a base station of cellular wireless communications.

A Chinese patent with an application number of 00816660.9 discloses a relay apparatus for sending an RF signal to an environment isolated from the RF signal, wherein the relay apparatus comprises a master transceiver unit having a master port for receiving an RF signal, a Local Oscillator (LO) which is configured to generate an LO signal at an LO frequency, and a frequency divider which is configured to divide the LO frequency of the LO signal by an integer to produce a divided LO signal. The master transceiver unit also comprises a mixer coupled with the master port and the frequency divider and configured to generate an intermediate-frequency (IF) signal responsive to the RF signal and the LO signal. The apparatus also comprises one or more slave transceiver units, each unit positioned within the environment isolated from the RF signal and comprising: a frequency multiplier which is configured to generate a recovered LO signal at the LO frequency by multiplying the frequency of the divided LO signal by the same integer, a slave mixer coupled with the frequency multiplier and configured to generate a recovered RF signal responsive to the recovered LO signal and the IF signal, and a slave port coupled with the slave mixer and configured to receive the recovered RF signal from the slave mixer and transmit the recovered RF signal to the isolated environment. The apparatus further comprises one or more cables connected between the master transceiver unit and the one or more slave transceiver units and configured to transmit the IF signal and the divided LO signal between the master transceiver unit and the one or more slave transceiver units.

A Chinese patent with an application number of 01811437.7 discloses a data relay of an RF base station, wherein a data relay system is added to a wireless communications network to increase user data rates at the periphery of a cellular coverage area by boosting a downlink (from a base station to a mobile user) signal and an uplink (from a mobile user to a base station) signal. The data relay system comprises a signal tagging device which is configured to add a unique electronic signature to a relay signal such that position determination errors due to a non-line of sight transmission path can be corrected. The relay signal is received and processed by a location measurement unit so that the time of arrival is determined and the signal tag of the relay signal is extracted. Then, an arrival time measurement value and a recovered signal tag are processed at a mobile location center so that the true position of the transmitter is determined.

A Chinese patent with an application number of 200610124325.6 discloses a self-excitation resistance module of a repeater system, which is coupled with an uplink and a downlink of a common frequency wireless repeater. The module comprises: a reference signal generation module which is configured to couple a path of RF signal to be output in a link and take the coupled RF signal as a reference signal; a down-conversion device which is configured to down-convert a link signal and the reference signal in the link, to which the down-conversion belongs, from an RF signal format into a baseband signal format, a self-excitation elimination module which is configured to eliminate the self-excitation element of the link signal in the link, to which the down-conversion belongs, on the basis of the reference signal in a baseband level, so as to output a multi-carrier baseband signal of which the self-excitation interference signal is eliminated; an up-conversion device which is configured to up-convert the multi-carrier baseband signal into an RF signal. The technical solution enables the common frequency wireless repeater to eliminate the self-excitation interference generated by a feedback signal effectively and self adaptively, reduces the requirement of isolation between a forward antenna and a backward antenna, improves the gain of the system, enlarges the coverage of the repeater, and is applicable to systems such as Global System for Mobile Communication (GSM)/CDMA/CDMA2000/Wideband Code Division Multiple Access (WCDMA).

The existing technologies of the analog RF repeater, the digital relay, the home nodeB and the wireless gateway have a common defect as follows: the analog RF repeater, the digital relay, the home nodeB and the wireless gateway respectively determine physical structures and design communication protocols according to their own application scenes, lacking a flexibly configurable uniform architecture, thus multifarious varieties of commercial products are generated, not only design and manufacturing costs are increased, but maintenance cost is increased.

## Summary of the Invention

In view of the problem above, the present invention provides a reconfigurable wireless node and a method for the same to collaborate with a wireless access point of a macro cell, to reduce the variety of hardware platform and reduce manufacturing and maintenance costs of a product.

The technical solution of the present invention is realized as follows.

The present invention provides a reconfigurable wireless node, comprising: a first communication device, a second communication device, and a co-axial cable providing an analog channel and a digital channel for communications between the first communication device and the second communication device, wherein

the analog channel is configured to transmit a Radio Frequency (RF) signal from a receiving antenna of the first communication device to a sending antenna of the second communication device by an RF direct amplification method, or transmit an RF signal from a receiving antenna of the second communication device to a sending antenna of the first communication device by the RF direct amplification method; and

the digital channel is configured to transmit control information and data from the first communication device to the second communication device, or from the second communication device to the first communication device.

Preferably, the first communication device comprises: a first antenna unit, a first RF receiving transmission-way unit, a first RF signal allocation unit, a first receiving transmission-way baseband processing unit, an operation mode management and control unit, a first interface drive unit, a first co-axial cable interface unit, a first RF sending transmission-way unit, a first RF signal selection unit and a first sending transmission-way baseband processing unit, wherein

the first antenna unit is configured to transmit a signal to a micro cell covered by the first communication device and/or receive a signal from the micro cell;

the first RF receiving transmission-way unit is configured to perform filtering and low-noise amplification on the signal received by the first antenna unit;

the first RF signal allocation unit is configured to allocate an RF signal output from the first RF receiving transmission-way unit between the first receiving transmission-way baseband processing unit and the analog channel contained in the first co-axial cable interface unit;

the first receiving transmission-way baseband processing unit is configured to perform baseband processing on the RF signal allocated by the first RF signal allocation unit;

the operation mode management and control unit is configured to manage an operation mode of the first communication device and the second communication device and control an operation state of the first communication device;

the first interface drive unit is configured to perform data communication between the first communication device and the second communication device through a data transmission-way of the co-axial cable;

the first co-axial cable interface unit is configured to be coupled with the first interface drive unit and perform communications with the second communication device, a local area network or a hybrid fibre coax network through the co-axial cable;

the first RF sending transmission-way unit is configured to transmit a signal to the micro cell covered by the first communication device through the first antenna unit;

the first RF signal selection unit is configured to control an input of a transmitted signal to the first RF sending transmission-way unit; and

the first sending transmission-way baseband processing unit is configured to perform baseband processing on the signal transmitted to the micro cell.

Preferably, the management of the operation mode of the first communication device and the second communication device comprises at least one of the following: RF signal direct amplification configuration management, receiving-sending isolation measurement management, RF transmission-way and baseband processing configuration management.

Preferably, the operation mode management and control unit comprises: a first RF direct amplification control sub-unit, a first RF transmission-way and baseband processing configuration sub-unit and a synchronization control sub-unit, wherein

the first RF direct amplification control sub-unit is configured to perform the RF signal direct amplification configuration management for the first communication device and the second communication device;

the first RF transmission-way and baseband processing configuration sub-unit is configured to perform the RF transmission-way and baseband processing configuration management for the first communication device and the second communication device; and

the synchronization control sub-unit is configured to control a radio frame transmitted by the first communication device on a specific channel to be synchronous with a radio frame transmitted by an access point of a macro cell of a wireless access network or a terrestrial television broadcast transmitter on a frequency band of the specific channel or other frequency bands.

Preferably, the first communication device further comprises: an interface unit communicated with a wired network; and the interface unit is configured to transmit control signalling and service data between the first communication device and a twisted-pair-based wired network.

Preferably, the second communication device comprises: a second antenna unit, a second RF receiving transmission-way unit, a second RF signal allocation unit, a second receiving transmission-way baseband processing unit, an operation mode control unit, a second interface drive unit, a second co-axial cable interface unit, a second RF sending transmission-way unit, a second RF signal selection unit and a second sending transmission-way baseband processing unit, wherein

the second antenna unit is configured to transmit a signal to a wireless access network and/or receive a signal from the wireless access network;

the second RF receiving transmission-way unit is configured to perform filtering and low-noise amplification on the signal received by the second antenna unit;

the second RF signal allocation unit is configured to allocate an RF signal output from the second RF receiving transmission-way unit between the second receiving transmission-way baseband processing unit and the analog channel contained in the second co-axial cable interface unit;

the second receiving transmission-way baseband processing unit is configured to perform baseband processing on the RF signal allocated by the second RF signal allocation unit;

the operation mode control unit is configured to control an operation state of the second communication device;

the second interface drive unit is configured to perform data communication between the second communication device and the first communication device through a data transmission-way of the co-axial cable;

the second co-axial cable interface unit is configured to be coupled with the second interface drive unit and perform communications with the first communication device, a local area network or a hybrid fibre coax network through the co-axial cable;

the second RF sending transmission-way unit is configured to transmit a signal to an access point of the wireless access network through the second antenna unit;

the second RF signal selection unit is configured to control an input of a transmitted signal to the second RF sending transmission-way unit; and

the second sending transmission-way baseband processing unit is configured to perform baseband processing on the signal transmitted to the access point of the wireless access network.

Preferably, the control of the operation state of the second communication device comprises at least one of the following: synchronization signal extraction, RF signal direct amplification operation mode control.

Preferably, the first RF receiving transmission-way unit and the second RF receiving transmission-way unit comprise one or more RF receiving transmission-ways; and the first RF sending transmission-way unit and the second RF sending transmission-way unit comprise one or more RF sending transmission-ways.

Preferably, the first interface drive unit of the first communication device and the second interface drive unit of the second communication device collaborate with each other to implement data communication between the first communication device and the second communication device through the digital channel of the co-axial cable; and the data communication between the first communication device and the second communication device comprises:

configuring a first channel on a first frequency band of the co-axial cable and configuring a second channel on a second frequency band, wherein the first channel configured on the first frequency band is a channel with a fixed operating frequency, and the second frequency band is one frequency band with a changeable frequency location and/or a changeable frequency band width;

during a first time interval, the first interface drive unit and the second interface drive unit using the first channel to transmit frequency location information of the second channel, or using the first channel to transmit information about a frequency location and a channel width of the second channel;

during a second time interval, the first interface drive unit and the second interface drive unit using the second channel on the second frequency band to transmit service data and/or wireless node control information between a terminal and a wireless access network.

The present invention also provides a method for a reconfigurable wireless node to collaborate with a wireless access point of a macro cell, comprising:

the reconfigurable wireless node configuring a terminal-oriented downlink channel on a first frequency band, and controlling a first radio frame which carries the downlink channel to keep time-synchronous with a second radio frame which carries a downlink channel configured by the wireless access point of the macro cell on a second frequency band;

during a first time interval contained in a first radio frame period of the reconfigurable wireless node, the reconfigurable wireless node sending, to a micro cell served by the reconfigurable wireless node, an RF direct amplification signal of a signal which is on a channel contained in the second radio frame; and during a second time interval contained in the first radio frame period of the reconfigurable wireless node, the reconfigurable wireless node configuring a downlink channel, which is used for communications between the reconfigurable wireless node and a terminal served by the reconfigurable wireless node and located in the micro cell, on the first frequency band or on the first frequency band and the second frequency band in an idle time slot of the second radio frame.

Preferably, the first frequency band and the second frequency band are in one of the following relationships:

the first frequency band has a same bandwidth as the second frequency band;
the first frequency band is adjacent to the second frequency band in a frequency domain;
the first frequency band is a sub-band of the second frequency band.

Preferably, the first radio frame which carries the downlink channel keeping time-synchronous with the second radio frame which carries the downlink channel configured by the wireless access point of the macro cell on the second frequency band comprises:

keeping a start moment of a frame header of the first radio frame consistent with a start moment of a frame header of the second radio frame; or,
keeping a fixed time difference between the start moment of the frame header of the first radio frame and the start moment of the frame header of the second radio frame.

Preferably, the step of the reconfigurable wireless node sending, to the micro cell served by the reconfigurable wireless node, the RF direct amplification signal of the signal which is on the channel contained in the second radio frame adopts one of the following sending methods:

sending all signals, which are on the second radio frame and are transmitted within the first time interval contained in the first wireless frame period, by an RF direct amplification method;
sending a part of signals, which are on the second radio frame and are transmitted within the first time interval contained in the first radio frame period, by the RF direct amplification method.

Preferably, the step of configuring the downlink channel, which is used for communications between the reconfigurable wireless node and the terminal served by the reconfigurable wireless node and located in the micro cell, on the first frequency band or on the first frequency band and the second frequency band comprises:

the reconfigurable wireless node acquiring from a network side an idle time slot location of a radio frame of a wireless access network on the second frequency band; and

the reconfigurable wireless node assigning a time-frequency resource for the terminal served by the reconfigurable wireless node on the first frequency band or on the first frequency band and the second frequency band in the acquired idle time slot.

The present invention also provides a method for a reconfigurable wireless node to avoid a self-excitation of an RF direct amplification transmission-way, comprising:

a first communication device sending a pseudorandom sequence signal, which is used for measuring an isolation value between a sending antenna and a receiving antenna, based on a preset power value using a first antenna unit on a channel of a first frequency band covered by an RF direct amplification transmission-way or on a second frequency band not used by the RF direct amplification transmission-way; or, the first communication device sending a beacon signal, which accords with a wireless communication technical specification, on a third frequency band based on a power P_out; a second RF receiving transmission-way unit in a second communication device performing, on the channel of the first frequency band covered by the RF direct amplification transmission-way, low-noise amplification on a pseudorandom sequence received by a second antenna unit and then sending the pseudorandom sequence subjected to the low-noise amplification to a second receiving transmission-way baseband processing unit, the second receiving transmission-way baseband processing unit then performing detection and power measurement on the pseudorandom sequence using an identification number of the first communication device to obtain a measured power P_ind; or, the second RF receiving transmission-way unit in the second communication device performing, on the second frequency band, low-noise amplification on the pseudorandom sequence received by the second antenna unit and then sending the pseudorandom sequence subjected to the low-noise amplification to the second receiving transmission-way baseband processing unit, the second receiving transmission-way baseband processing unit then performing detection and power measurement on the pseudorandom sequence using the identification number of the first communication device to obtain a measured power P_ind; or, the second RF receiving transmission-way unit in the second communication device performing, on the third frequency band, low-noise amplification on the beacon signal received by the second antenna unit and then sending the beacon signal subjected to the low-noise amplification to the second receiving transmission-way baseband processing unit, the second receiving transmission-way baseband processing unit then performing detection and power measurement on the beacon signal using the identification number of the first communication device to obtain a measured power P_ind;
according to the P_out and the P_ind, calculating an isolation value between the first antenna unit of the first communication device and the second antenna unit of the second communication device which are used by the RF direct amplification transmission-way; and
the reconfigurable wireless node controlling a gain of the RF direct amplification transmission-way on the first frequency band to be less than the measured isolation value between the sending antenna and the receiving antenna.

Preferably, the step of sending the pseudorandom sequence signal, which is used for measuring the isolation value between the sending antenna and the receiving antenna, based on the preset power value using the first antenna unit on the channel of the first frequency band covered by the RF direct amplification transmission-way or on the second frequency band not used by the RF direct amplification transmission-way comprises:

a first sending transmission-way baseband processing unit in the first communication device generating the pseudorandom sequence and performing pre-process of transmission, wherein the pre-process of transmission comprises one or more of the following processes: adding the identification number of the first communication device, up-conversion, power control;
sending the pseudorandom sequence subjected to the pre-process of transmission to a first RF sending transmission-way unit via a first RF signal selection unit; the first RF sending transmission-way unit amplifying an RF direct amplification signal from the second antenna unit of the second communication device and the pseudorandom sequence, and then sending the amplified RF direct amplification signal and the amplified pseudorandom sequence out based on the power P_out on the channel of the first frequency band covered by the RF direct amplification transmission-way via the first antenna unit; or, the first RF sending transmission-way unit amplifying the pseudorandom sequence and then sending the amplified pseudorandom sequence out based on the power P_out on the second frequency band via the first antenna unit.

Preferably, the second frequency band not used by the RF direct amplification transmission-way is a frequency band with a frequency lower than that of the first frequency band and with a frequency interval from the first frequency band less than one octave.

Preferably, the method further comprises: according to the P_out and the P_ind, calculating the isolation value between the first antenna unit of the first communication device and the second antenna unit of the second communication device which are used by the RF direct amplification transmission-way through a following formula: ISO=10Log (P_ind/P_out),

wherein ISO represents the isolation value and Log represents logarithm.

The present invention provides a reconfigurable wireless node architecture supporting the analog RF repeater, the digital relay, the home NodeB and the wireless gateway. The wireless node architecture is a uniform hardware platform. Through a flexible configuration of the uniform hardware platform, different functions are implemented and a software/hardware resource is shared between the different functions. Through the uniform hardware architecture, the variety of hardware platforms is reduced; through the flexible configuration, the architecture is applicable to different application scenes. Therefore, the variety of hardware platforms is reduced, and manufacturing and maintenance costs are reduced.

The method provided by the present invention for a micro cell node to collaborate with a macro cell access point can avoid co-channel interference and adjacent-channel interference of a wireless node of a micro cell on a macro cell and improve spectrum utilization.

## Brief Description of the Drawings

Fig. 1 shows a structure diagram of a reconfigurable wireless node in an embodiment of the present invention;

Fig. 2 shows a structure diagram of a terminal-oriented communication device in an embodiment of the present invention;

Fig. 3 shows a structure diagram of a wireless access network-oriented communication device in an embodiment of the present invention;

Fig. 4 shows a structure diagram of the coupling of a terminal-oriented communication device and a wireless access network-oriented communication device through a co-axial cable in an embodiment of the present invention;

Fig. 5 shows a flowchart of a method for a reconfigurable wireless node of a micro cell to collaborate with a wireless access point of a macro cell in an embodiment of the present invention;

Fig. 6 shows a communication system containing a reconfigurable wireless node of a micro cell and a wireless access point of a macro cell in an embodiment of the present invention;

Fig. 7 shows a structure diagram of a reconfigurable wireless node in an embodiment of the present invention;

Fig. 8 shows a diagram of applying a reconfigurable wireless node to an access network formed by an LTE/UMTS dual-mode system in an embodiment of the present invention;

Fig. 9 (a) shows a first diagram of sharing spectrum between a reconfigurable wireless node of a micro cell and a wireless access point of a macro cell in an embodiment of the present invention; and

Fig. 9 (b) shows a second diagram of sharing spectrum between a reconfigurable wireless node of a micro cell and a wireless access point of a macro cell in an embodiment of the present invention.

## Detailed Description of the Embodiments

The technical solution of the present invention is further illustrated below in detail in conjunction with accompanying drawings and specific embodiments.

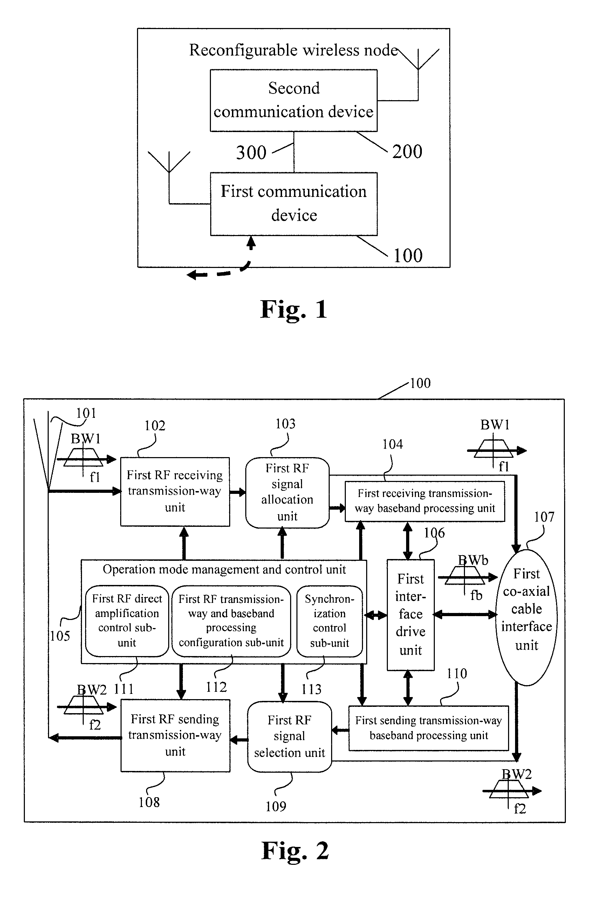

A reconfigurable wireless node provided by an embodiment of the present invention, as shown in Fig. 1, comprises: a first communication device (that is, a terminal-oriented wireless communication device) 100, a second communication device (that is, a wireless access network-oriented wireless communication device) 200, and a co-axial cable 300 providing an analog channel and a digital channel for communications between the first communication device 100 and the second communication device 200.

The analog channel contained in the co-axial cable 300 is configured to transmit an RF signal from a receiving antenna of the first communication device 100 to a sending antenna of the second communication device 200 by an RF direct amplification method, or transmit the RF signal from a receiving antenna of the second communication device 200 to a sending antenna of the first communication device 100 by the RF direct amplification method; the digital channel contained in the co-axial cable 300 is configured to transmit control information and data from the first communication device 100 to the second communication device 200, or from the second communication device 200 to the first communication device 100.

The internal structure of the first communication device 100 is as shown in Fig. 2, comprising: a first antenna unit 101, a first RF receiving transmission-way unit 102, a first RF signal allocation unit 103, a first receiving transmission-way baseband processing unit 104, an operation mode management and control unit 105, a first interface drive unit 106, a first co-axial cable interface unit 107, a first RF sending transmission-way unit 108, a first RF signal selection unit 109 and a first sending transmission-way baseband processing unit 110, wherein the operation mode management and control unit 105 comprises: a first RF direct amplification control sub-unit 111, a first RF transmission-way and baseband processing configuration sub-unit 112 and a synchronization control sub-unit 113.

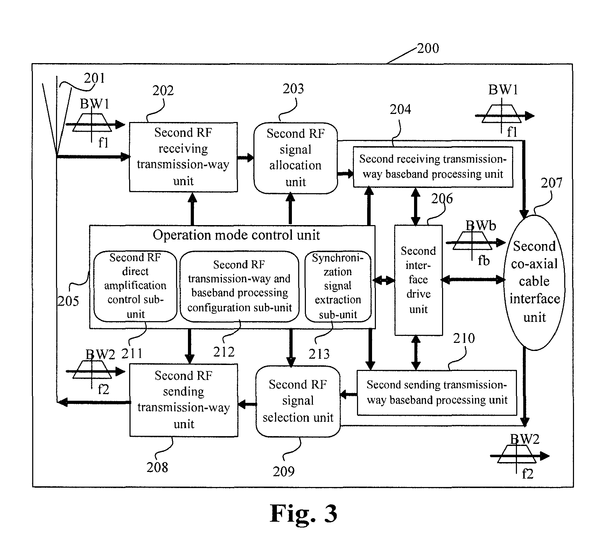

The internal structure of the second communication device 200 is as shown in Fig. 3, comprising: a second antenna unit 201, a second RF receiving transmission-way unit 202, a second RF signal allocation unit 203, a second receiving transmission-way baseband processing unit 204, an operation mode control unit 205, a second interface drive unit 206, a second co-axial cable interface unit 207, a second RF sending transmission-way unit 208, a second RF signal selection unit 209 and a second sending transmission-way baseband processing unit 210.

The operation mode control unit 205 comprises: a second RF direct amplification control sub-unit 211, a second RF transmission-way and baseband processing configuration sub-unit 212 and a synchronization signal extraction sub-unit 213.

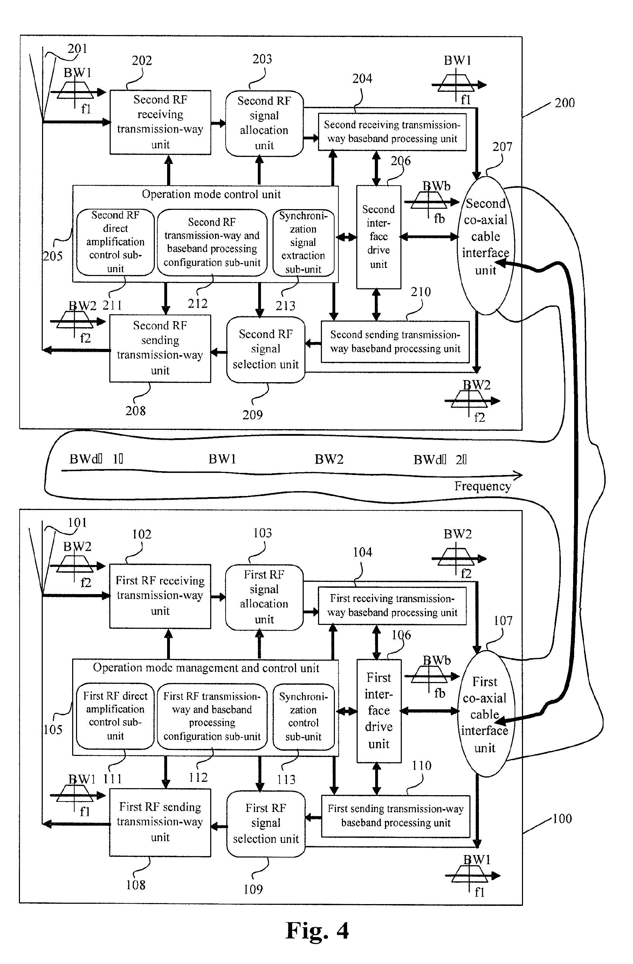

Fig. 4 shows a structure diagram of the coupling of the first communication device 100 containing the internal structure shown in Fig. 2 and the second communication device 200 containing the internal structure shown in Fig. 3 through the co-axial cable 300. The composition and the implementation of the first communication device 100 are illustrated below in detail in conjunction with Fig. 2 first.

The first antenna unit 101 is configured to transmit a signal to a micro cell covered by the first antenna unit and/or receive a signal from the micro cell, wherein the formation of the first antenna unit comprises one of the following:

> 1. An antenna formed by a single antenna unit, wherein the antenna unit can be an omnidirectional antenna or a directional antenna;
> 2. An antenna array formed by a plurality of antenna units, wherein the antenna units can be omnidirectional antennae or directional antennae.

The first RF receiving transmission-way unit 102 is configured to perform filtering and low-noise amplification on the signal from the first antenna unit 101; and the first RF receiving transmission-way unit 102 comprises a filter and a low-noise amplifier, wherein the low-noise amplifier is one of the following:

> 1. the low-noise amplifier contained in the first RF receiving transmission-way unit 102 only amplifies signals on a single channel, wherein the single channel refers to a channel carried by one carrier;
> 2. the low-noise amplifier contained in the first RF receiving transmission-way unit 102 amplifies two or more channels, wherein each channel is carried by an independent physical carrier, and these independent physical carriers are adjacent or not adjacent in a frequency domain.

The first RF signal allocation unit 103 is configured to allocate an RF signal output from the first RF receiving transmission-way unit 102 between the first receiving transmission-way baseband processing unit 104 and the analog channel contained in the first co-axial cable interface unit 107, wherein the specific allocation mode comprises one of the following modes.

> 1. The first RF signal allocation unit 103 only allocates the RF signal output from the first RF receiving transmission-way unit 102 to the first receiving transmission-way baseband processing unit 104, which then performs baseband process on the RF signal. For example, the first receiving transmission-way baseband processing unit 104 supports a technical specification of a receiving channel of a wireless access point and performs demodulation and decoding on the received signal according to the related technical specification.
> 2. The first RF signal allocation unit 103 allocates the RF signal output from the first RF receiving transmission-way unit 102 to the first receiving transmission-way baseband processing unit 104 and the analog channel contained in the first co-axial cable interface unit 107. The RF signal sent to the first receiving transmission-way baseband processing unit 104 is subjected to baseband process, for example, the first receiving transmission-way baseband processing unit 104 supports a technical specification of a receiving channel of a wireless access point and performs demodulation and decoding on the received signal according to the related technical specification. The RF signal sent to the analog channel contained in the first co-axial cable interface unit 107 is sent to the second communication device 200 through the co-axial cable 300, and is sent to the wireless access network through the second antenna unit 201 after being amplified by the second RF sending transmission-way unit 208 in the second communication device 200.
> 3. The first RF signal allocation unit 103 only allocates the RF signal output from the first RF receiving transmission-way unit 102 to the analog channel contained in the first co-axial cable interface unit 107. The RF signal sent to the analog channel contained in the first co-axial cable interface unit 107 is sent to the second communication device 200 through the co-axial cable 300, and is sent to the wireless access network through the second antenna unit 201 after being amplified by the second RF sending transmission-way unit 208 in the second communication device 200.

The first receiving transmission-way baseband processing unit 104 supports the technical specification of the receiving channel of the wireless access point and performs baseband process on a signal from a terminal according to the related technical specification, for example, the first receiving transmission-way baseband processing unit 104 performs demodulation and decoding on the signal from the terminal. The first receiving transmission-way baseband processing unit 104 supports one or more of the following operation modes:

1. supporting only one wireless communication technical specification at a same time, wherein the technical specification is one of the following: A, a technical specification of a UMTS system; B, a technical specification of a GSM system; C, a technical specification of an LTE/LTE-A system; D, a technical specification of a wireless local area network; E, a future new wireless technical specification;

2. supporting two or more wireless communication technical specifications to work in parallel at the same time, wherein these technical specifications are a combination of two or more of the following specifications: A, a technical specification of a UMTS system; B, a technical specification of a GSM system; C, a technical specification of an LTE/LTE-A system; D, a technical specification of a wireless local area network; E, a future new wireless technical specification.

The operation mode management and control unit 105 is configured to manage an operation mode of the first communication device 100 and the second communication device 200 and control an operation state of the first communication device 100. The management of the operation mode of the first communication device 100 and the second communication device 200 performed by the operation mode management and control unit 105 at least comprises one of the following contents.

1. RF signal direct amplification configuration management, wherein this function is implemented by the first RF direct amplification control sub-unit 111. RF transmission-ways of the first communication device 100 and the second communication device 200 are configured to be in an operation mode of direct amplification on a specific frequency band. Preferably, the management of the RF direct amplification mode is to control a direct amplification transmission-way to operate according to one of the following modes: (a) the direct amplification transmission-way directly amplifies RF signals in a continuous manner; (b) the direct amplification transmission-way amplifies RF signals in a discontinuous manner, for example, the direct amplification transmission-way performs direct amplification only when a base station of a macro cell of a wireless access network transmits signals, and stops the RF signal direct amplification in an idle time slot of a radio frame of the base station of the macro cell of the wireless access network, or, performs direct amplification on a control channel of the base station of the macro cell of the wireless access network only, or performs direct amplification on part service channels and a control channel of the base station of the macro cell of the wireless access network only.

2. Receiving-sending isolation measurement management, which manages the measurement mode of receiving-sending isolation between the sending/receiving antenna of the first communication device 100 and the receiving/sending antenna of the second communication device 200.

3. RF transmission-way and baseband processing configuration management, wherein this function is implemented by the first RF transmission-way and baseband processing configuration sub-unit 112 and comprises: assigning a frequency location used for configuring an operation channel, a frequency table range and a wireless communication technical specification needed on a specific frequency for the first communication device 100 and the second communication device 200.

The control of the operation state of the first communication device 100 by the operation mode management and control unit 105 comprises one of the following contents.

1. Synchronization control, which controls a radio frame transmitted by the first communication device 100 on a specific channel to be synchronous with a radio frame transmitted by an access point of a macro cell of a wireless access network or by a terrestrial television broadcast transmitter on a frequency band of the specific channel or on other frequency bands, wherein the synchronization function is implemented by the synchronization control sub-unit 113 according to a synchronization signal provided by the second communication device 200.

2. Operation mode control of RF signal direct amplification, which is implemented based on the direct amplification mode regulated in the RF signal direct amplification configuration management performed by the operation mode management and control unit 105, that is, a direct amplification transmission-way is controlled to operate according to one of the following modes: (a) the direct amplification transmission-way directly amplifies RF signals in a continuous manner; (b) the direct amplification transmission-way amplifies RF signals in a discontinuous manner, for example, the direct amplification transmission-way performs direct amplification only when a base station of a macro cell of a wireless access network transmits signals, and stops the RF signal direct amplification in an idle time slot of a radio frame of the base station of the macro cell of the wireless access network, or, performs direct amplification on a control channel of the base station of the macro cell of the wireless access network only, or performs direct amplification on part service channels and a control channel of the base station of the macro cell of the wireless access network only. The specific control mode comprises downlink signal amplification and uplink signal amplification. The downlink signal direct amplification refers to the amplification of an RF signal from the receiving antenna of the second communication device 200 to the sending antenna of the first communication device 100. The implementation method of the downlink direct amplification comprises one or two of the following: (a) the operation mode management and control unit 105 controls the first RF signal selection unit 109, and/or the operation mode control unit 205 controls the second RF signal allocation unit 203 to implement a specific direct amplification mode for a specific RF signal; (b) the operation mode management and control unit 105 controls an output power of a power amplifier in the first RF sending transmission-way unit 108 of the first communication device 100 to be zero on a corresponding frequency band. The uplink signal direct amplification refers to the amplification of an RF signal from the receiving antenna of the first communication device 100 to the sending antenna of the second communication 200. The implementation method of the uplink direct amplification comprises one or two of the following: (a) the operation mode management and control unit 105 controls the first RF signal allocation unit 103, and/or the operation mode control unit 205 controls the second RF signal selection unit 209 to implement a specific direct amplification mode for a specific RF signal; (b) the operation mode control unit 205 controls an output power of a power amplifier in the second RF sending transmission-way unit 208 of the second communication device 200 to be zero on a corresponding frequency band.

The first interface drive unit 106 is configured to cooperate with the second interface drive unit 206 contained in the second communication device 200 and implement data communication between the first communication device 100 and the second communication device 200 through a data transmission-way of the co-axial cable 300. A specific implementation method of the first interface drive unit 106 and the second interface drive unit 206 comprises one of the following:

1. adopting an existing communication protocol, for example, an Ethernet protocol;
2. adopting a new technical specification, for example, a dual-channel transmission protocol.

The implementation method of the dual-channel transmission protocol is described as follows.
A first channel is configured on a first frequency band WBd (1) in the co-axial cable and a second channel is configured on a second frequency band WBd (2), wherein the first channel configured on the first frequency band WBd (1) is a channel with a fixed operating frequency, and the second frequency band WBd (2) is a frequency band with a changeable frequency location and/or a changeable frequency band width, wherein the change here is to keep off the frequency band occupied by the analog RF channel in the co-axial cable.
The operating method of the dual-channel transmission protocol is as follows:

during a first time interval, the first interface drive unit 106 contained in the first communication device 100 and the second interface drive unit 206 contained in the second communication device 200 adopt the first channel on the first frequency band to transmit frequency location information of the second channel on the second frequency band, or to transmit frequency location and channel width information of the second channel on the second frequency band;
during a second time interval, the first interface drive unit 106 contained in the first communication device 100 and the second interface drive unit 206 contained in the second communication device 200 adopt the second channel on the second frequency band to transmit wireless node control information and/or service data from a terminal to the wireless access network.

The first co-axial cable interface unit 107 is a co-axial cable coupler. Further, the first interface drive unit 106 is coupled with the first co-axial cable interface unit 107 to support communications between the first communication device 100 and the second communication device 200, a local area network or a hybrid fibre coax network through the co-axial cable 300. The communication mode comprises one of the following: 1) sending RF signals; 2) sending control signalling and service data.
The first RF sending transmission-way unit 108 is configured to transmit a signal to a micro cell covered by the first RF sending transmission-way unit 108 and comprises a linear power amplifier, wherein the amplifier can amplify one or more carriers. The signal transmitted on a specific frequency band by the first RF sending transmission-way unit 108 comprises one of the following signals:

1. a signal which accords with a downlink air interface technical specification of a wireless communication base station and covers a micro cell;
2. superposition of a signal which accords with a downlink air interface technical specification of a wireless communication base station and covers a micro cell and a downlink signal of the wireless communication base station covering a macro cell, wherein the specific method is as follows: the first RF signal selection unit 109 connects an RF direct amplification signal occupying a frequency band A from the second RF receiving transmission-way unit 202 to an input end of the first RF sending transmission-way unit 108; the first RF sending transmission-way unit 108 up coverts a signal from the first sending transmission-way baseband processing unit 110 into the frequency band A; then the two branches of signals are amplified and sent to a micro cell on the frequency band A.

The first RF signal selection unit 109 comprises an RF switch configured to implement disconnection and connection between the first RF sending transmission-way unit 108 and an RF signal and is configured to control input of an RF direct amplification signal to the first RF sending transmission-way unit 108.

The first sending transmission-way baseband processing unit 110 comprises a processing function which accords with the downlink air interface technical specification of a wireless communication base station, for example, the first sending transmission-way baseband processing unit 110 comprises a scheduler which is configured to perform comprehensive scheduling on an uplink and a downlink. The first sending transmission-way baseband processing unit 110 can support one or more downlink air interface technical specifications of wireless communication base stations simultaneously.

The composition and the implementation of the second communication device 200 are illustrated below in detail in conjunction with Fig. 3. It should be noted that the second communication device 200 has a structure similar to that of the first communication device 100, and the main difference lies in that: the RF transmission-way and baseband processing of the first communication device 100 is implemented based on a technical specification of a base station; while the RF transmission-way and baseband processing of the second communication device 200 is implemented based on a technical specification of a terminal.

The second antenna unit 201 is configured to transmit a signal to a wireless access network and/or receive a signal from the wireless access network, wherein the formation of the second antenna unit 201 comprises one of the following:

1. An antenna formed by a single antenna unit, wherein the antenna unit can be an omnidirectional antenna or a directional antenna;
2. An antenna array formed by a plurality of antenna units, wherein the antenna units can be omnidirectional antennae or directional antennae.

The second RF receiving transmission-way unit 202 is configured to perform filtering and low-noise amplification on the signal from the second antenna unit 201; and the second RF receiving transmission-way unit 202 comprises a filter and a low-noise amplifier, wherein the low-noise amplifier is one of the following:

1. the low-noise amplifier contained in the second RF receiving transmission-way unit 202 only amplifies signals on a single channel, wherein the single channel refers to a channel carried by one carrier;
2. the low-noise amplifier contained in the second RF receiving transmission-way unit 202 amplifies two or more channels, wherein each channel is carried by an independent physical carrier, and these independent physical carriers are adjacent or not adjacent in a frequency domain.

The second RF signal allocation unit 203 is configured to allocate an RF signal output from the second RF receiving transmission-way unit 202 between the second receiving transmission-way baseband processing unit 204 and the analog channel contained in the second co-axial cable interface unit 207, wherein the specific allocation mode comprises one of the following modes.

1. The second RF signal allocation unit 203 only allocates the RF signal output from the second RF receiving transmission-way unit 202 to the second receiving transmission-way baseband processing unit 204, which then performs baseband process on the RF signal. For example, the second receiving transmission-way baseband processing unit 204 supports a technical specification of signal receiving and processing of a wireless terminal and performs demodulation and decoding on the received signal according to the related technical specification.
2. The second RF signal allocation unit 203 allocates the RF signal output from the second RF receiving transmission-way unit 202 to the second receiving transmission-way baseband processing unit 204 and the analog channel contained in the second co-axial cable interface unit 207. The RF signal sent to the second receiving transmission-way baseband processing unit 204 is subjected to baseband process, for example, the second receiving transmission-way baseband processing unit 204 supports a technical specification of a receiving channel of a wireless access point and performs demodulation and decoding on the received signal according to the related technical specification. The RF signal sent to the analog channel contained in the second co-axial cable interface unit 207 is sent to the first communication device 100 through the co-axial cable 300, and is sent to the micro cell covered by the first antenna unit 101 through the first antenna unit 101 after being amplified by the first RF sending transmission-way unit 108 in the first communication device 100.
3. The second RF signal allocation unit 203 only allocates the RF signal output from the second RF receiving transmission-way unit 202 to the analog channel contained in the second co-axial cable interface unit 207. The RF signal sent to the analog channel contained in the second co-axial cable interface unit 207 is sent to the first communication device 100 through the co-axial cable 300, and is sent to the micro cell covered by the first antenna unit 101 through the first antenna unit 101 after being amplified by the first RF sending transmission-way unit 108 in the first communication device 100.

The second receiving transmission-way baseband processing unit 204 supports a technical specification of processing a received signal by a wireless terminal and performs baseband process on a received signal according to the air interface technical specification of an accessed wireless access network base station, for example, the second receiving transmission-way baseband processing unit 204 performs demodulation and decoding on the received signal. The second receiving transmission-way baseband processing unit 204 supports one or more of the following operation modes:

    1. supporting one wireless communication technical specification at a same time, wherein the communication technical specification is one of the following: A, a technical specification of a UMTS system; B, a technical specification of a GSM system; C, a technical specification of an LTE/LTE-A system; D, a technical specification of a fixed wireless access system; E, a technical specification of a territorial television broadcast system;

    2. supporting two or more wireless communication technical specifications to work in parallel at the same time, wherein these technical specifications are a combination of two or more of the following specifications: A, a technical specification of a UMTS system; B, a technical specification of a GSM system; C, a technical specification of an LTE/LTE-A system; D, a technical specification of a fixed wireless access system; E, a technical specification of a territorial television broadcast system.

The operation mode control unit 205 is configured to control an operation state of the second communication device 200, wherein the control comprises at least one of the following contents.

    1. Synchronization signal extraction, in which the second receiving transmission-way baseband processing unit 204 is controlled to extract a synchronization signal from a radio frame sent by an access point of a macro cell of a wireless access network, specifically, a start moment of a frame header of the radio frame sent by the access point of the macro cell of the wireless access network is acquired, wherein the start moment is used to control a radio frame transmitted by the first communication device 100 on a specific channel to be synchronous with a radio frame transmitted by the access point of the macro cell of the wireless access network or a terrestrial television broadcast transmitter.

    2. Operation mode control of RF signal direct amplification, in which a direct amplification transmission-way is controlled to operate according to one of the following modes: (a) the direct amplification transmission-way directly amplifies RF signals in a continuous manner; (b) the direct amplification transmission-way amplifies RF signals in a discontinuous manner, for example, the direct amplification transmission-way performs direct amplification only when a base station of a macro cell of a wireless access network transmits signals, and stops the RF signal direct amplification in an idle time slot of a radio frame of the base station of the macro cell of the wireless access network, or, performs direct amplification on a control channel of the base station of the macro cell of the wireless access network only, or performs direct amplification on part service channels and a control channel of the base station of the macro cell of the wireless access network only. The specific control mode comprises downlink signal amplification and uplink signal amplification. The downlink signal direct amplification refers to the amplification of an RF signal from the receiving antenna of the second communication device 200 to the sending antenna of the first communication device 100. The implementation method of the downlink direct amplification comprises one or two of the following: (a) the operation mode management and control unit 105 controls the first RF signal selection unit 109, and/or the operation mode control unit 205 controls the second RF signal allocation unit 203 to implement a specific direct amplification mode for a specific RF signal; (b) the operation mode management and control unit 105 controls an output power of a power amplifier in the first RF sending transmission-way unit 108 of the first communication device 100 to be zero on a corresponding frequency band. The uplink signal direct amplification refers to the amplification of an RF signal from the receiving antenna of the first communication device 100 to the sending antenna of the second communication 200. The implementation method of the uplink direct amplification comprises one or two of the following: (a) the operation mode management and control unit 105 controls the first RF signal allocation unit 103, and/or the operation mode control unit 205 controls the second RF signal selection unit 209 to implement a specific direct amplification mode for a specific RF signal; (b) the operation mode control unit 205 controls an output power of a power amplifier in the second RF sending transmission-way unit 208 of the second communication device 200 to be zero on a corresponding frequency band.

The second interface drive unit 206 is configured to cooperate with the first interface drive unit 106 contained in the first communication device 100 and implement data communication between the first communication device 100 and the second communication device 200 through a data transmission-way of the co-axial cable 300. A specific implementation method of the second interface drive unit 206 comprises one of the following:

1. adopting an existing communication protocol, for example, an Ethernet protocol;
2. adopting a new technical specification, for example, a dual-channel transmission protocol.

The implementation method of the dual-channel transmission protocol is described as follows.

A first channel is configured on a first frequency band WBd (1) in the co-axial cable and a second channel is configured on a second frequency band WBd (2), wherein the first channel configured on the first frequency band WBd (1) is a channel with a fixed operating frequency, and the second frequency band WBd (2) is a frequency band with a changeable frequency location and/or a changeable frequency band width, wherein the change here is to keep off the frequency band occupied by the analog RF channel in the co-axial cable.

The operating method of the dual-channel transmission protocol is as follows:

during a first time interval, the second interface drive unit 206 contained in the second communication device 200 and the first interface drive unit 106 contained in the first communication device 100 adopt the first channel on the first frequency band to transmit frequency location information of the second channel on the second frequency band, or to transmit frequency location and channel width information of the second channel on the second frequency band; during a second time interval, the second interface drive unit 206 contained in the second communication device 200 and the first interface drive unit 106 contained in the first communication device 100 adopt the second channel on the second frequency band to transmit wireless node control information and/or service data between a terminal and the wireless access network.

The second co-axial cable interface unit 207 is a co-axial cable coupler. Further, the second interface drive unit 206 is coupled with the second co-axial cable interface unit 207 to support communications between the second communication device 200 and the first communication device 100, a local area network or a hybrid fibre coax network through the co-axial cable 300. The communication mode comprises one of the following: 1) sending RF signals; 2) sending control signalling and service data.

The second RF sending transmission-way unit 208 is configured to transmit a signal to an access point of the wireless access network and comprises a linear power amplifier, wherein the amplifier can amplify one or more carriers. The signal transmitted by the second RF sending transmission-way unit 208 on a specific frequency band comprises one of the following signals:

1. a signal which accords with an air interface uplink technical specification of a cellular mobile communication network terminal;
2. a signal which accords with an air interface uplink technical specification of a wireless fixed access network terminal.

The second RF signal selection unit 209 comprises an RF switch configured to implement disconnection and connection between the second RF sending transmission-way unit 208 and an RF signal and is configured to control input of an RF direct amplification signal to the second RF sending transmission-way unit 208.

The second sending transmission-way baseband processing unit 210 comprises a processing function which accords with an uplink air interface technical specification of a wireless terminal, and the second sending transmission-way baseband processing unit 210 can support one or more uplink air interface technical specifications of wireless terminals simultaneously.

Optionally, the first communication device 100 also contains an interface unit for communicating with a wired network, wherein the interface unit is configured to implement communications between the first communication device 100 and a twisted-pair-based wired network and transmit control signalling and service data between the first communication device 100 and the twisted-pair-based wired network.

Preferably, in the second RF receiving transmission-way unit 202 and the second RF sending transmission-way unit 208 contained in the second communication device 200, and in the first RF receiving transmission-way unit 102 and the first RF sending transmission-way unit 108 contained in the first communication device 100, each RF sending/RF receiving transmission-way unit contains one or more RF sending/RF receiving transmission-ways, and each RF sending/RF receiving transmission-way contains one or more carriers.

By configuring related physical units in the second communication device 200 and the first communication device 100, the reconfigurable wireless node provided by the embodiments of the present invention can operate according to one of the following operation modes or combination thereof:

operation mode 1: RF repeater;
operation mode 2: digital relay using in-band backhaul;
operation mode 3: digital relay using out-of-band backhaul;
operation mode 4: wireless gateway.

When the second communication device 200 and the first communication device 100 are configured to be in the operation mode 1, a specific implementation method of the RF repeater of the second communication device 200 and the first communication device 100 comprises:

an RF direct amplification transmission-way from a wireless access network to a terminal is established, wherein the second RF receiving transmission-way unit 202 of the second communication device 200 is configured to be on a frequency band B1, the second RF receiving transmission-way unit 202 receives an RF signal on the frequency band B1 from the second antenna unit 201, an output signal on the frequency band B1 passes through the second RF signal allocation unit 203, the second co-axial cable interface unit 207, the analog RF channel of the co-axial cable 300 on the frequency band B1, the second co-axial cable interface unit 207 and the first RF signal selection unit 109 to be sent to the first RF sending transmission-way unit 108 which operates on the frequency band B1, and then to a micro cell covered by the wireless node through the first antenna unit 101 after being power-amplified by the first RF sending transmission-way unit 108;

an RF direct amplification transmission-way from a terminal to a wireless access network is established: the first RF receiving transmission-way unit 102 of the first communication device 100 is configured on a frequency band B2, the first RF receiving transmission-way unit 102 receives an RF signal on the frequency band B2 from the first antenna unit 101, an output signal on the frequency band B2 passes through the first RF signal allocation unit 103, the first co-axial cable interface unit 107, the analog RF channel of the co-axial cable 300 on the frequency band B2, the first co-axial cable interface unit 107 and the second RF signal selection unit 209 to be sent to the second RF sending transmission-way unit 208 which operates on the frequency band B2, and then to a base station of the wireless access network through the second antenna unit 201 after being power-amplified by the second RF sending transmission-way unit 208. When the B1 and the B2 are the same frequency band, an uplink transmission-way and a downlink transmission-way are configured for the RF direct amplification transmission-way described here based on a Time Division Duplexing (TDD) mode.

When the second communication device 200 and the first communication device 100 are configured to be in the operation mode 2, a specific implementation method of the digital relay using the in-band backhaul comprises: the second RF receiving transmission-way unit 202 of the second communication device 200 is configured to be on a frequency band B1, and the wireless communication technical specification used by the baseband process of the second receiving transmission-way baseband processing unit 204 is configured to be the same as the air interface technical specification of the wireless access network on the frequency band B1; the second RF sending transmission-way unit 208 is configured to be on a frequency band B2, and the wireless communication technical specification used by the baseband process of the second sending transmission-way baseband processing unit 210 is configured to be the same as the uplink air interface technical specification of the wireless access network on the frequency band B2; the first RF receiving transmission-way unit 102 of the first communication device 100 is configured to be on a frequency band B2, the wireless communication technical specification used by the baseband process of the first receiving transmission-way baseband processing unit 104 is configured to be the same as the technical specification of a terminal-oriented air interface uplink on the frequency band B2; the first RF sending transmission-way unit 108 is configured to be on a frequency band B1, and the wireless communication technical specification used by the baseband process of the first sending transmission-way baseband processing unit 110 is configured to be the same as the technical specification of a terminal-oriented downlink air interface on the frequency band B1.

A data transmission process of the in-band digital relay from a wireless access network to a terminal is that: during a first time interval, the second receiving transmission-way baseband processing unit 204 performs demodulation on a signal output from the second RF receiving transmission-way unit 202 to obtain service data and sends a data stream to the first sending transmission-way baseband processing unit 110 through the second interface drive unit 206, the second co-axial cable interface unit 207, the digital channel on the co-axial cable 300, the first co-axial cable interface unit 107 and the first interface drive unit 106; during a second time interval, the first sending transmission-way baseband processing unit 110 performs baseband process on the service data and sends the processed data to the first RF sending transmission-way unit 108, and the data amplified by the first RF sending transmission-way unit 108 are sent to the terminal through the first antenna unit 101.

When the second communication device 200 and the first communication device 100 are configured to be in the operation mode 3, a specific implementation method of the digital relay using out-of-band backhaul comprises: the second RF receiving transmission-way unit 202 of the second communication device 200 is configured to be on a frequency band B1, and the wireless communication technical specification used by the baseband process of the second receiving transmission-way baseband processing unit 204 is configured to be the same as the air interface technical specification of the wireless access network on the frequency band B1; the second RF sending transmission-way unit 208 is configured to be on a frequency band B2, and the wireless communication technical specification used by the baseband process of the second sending transmission-way baseband processing unit 210 is configured to be the same as the uplink air interface technical specification of the wireless access network on the frequency band B2; the first RF receiving transmission-way unit 102 of the first communication device 100 is configured to be on a frequency band B3, and the wireless communication technical specification used by the baseband process of the first receiving transmission-way baseband processing unit 104 is configured to be the same as the technical specification of a terminal-oriented air interface uplink on the frequency band B3; the first RF sending transmission-way unit 108 is configured to be on a frequency band B4, and the wireless communication technical specification used by the baseband process of the first sending transmission-way baseband processing unit 110 is configured to be the same as the technical specification of a terminal-oriented downlink air interface on the frequency band B4. The frequency band B3 is a frequency band the same as an uplink frequency band of a macro cell of the wireless access network or is a sub-frequency band of the uplink frequency band; and the frequency band B4 is a frequency band the same as a downlink frequency band of a macro cell of the wireless access network or is a sub-frequency band of the downlink frequency band. The technical specification of a terminal-oriented uplink air interface on the frequency band B3 is the same as the technical specification of an uplink air interface of a macro cell of the wireless access network; and the technical specification of a terminal-oriented downlink air interface on the frequency band B4 is the same as the technical specification of a downlink air interface of a macro cell of the wireless access network.

When the second communication device 200 and the first communication device 100 are configured to be in the operation mode 4, that is, wireless gateway, the configuration method is the same as that of the digital relay using out-of-band backhaul. Actually, the digital relay using out-of-band backhaul is a wireless gateway when the air interface technology used by the out-of-band backhaul supported by the second communication device 200 is different from the air interface technology used by the first communication device 100.

In addition, in order to avoid that a signal transmitted by the first antenna unit 101 orienting to a terminal/micro cell is strongly coupled to the second antenna unit 201 orienting to a wireless access network and then self-excitation is caused, the reconfigurable wireless node provided by the embodiments of the present invention needs to measure isolation between the first antenna unit 101 orienting to the terminal/micro cell and the second antenna unit 201 orienting to the wireless access network in real time and control the intensity of the signal coupled to the second antenna unit 201 orienting to the wireless access network in real time, wherein the specific method comprises the following steps.

Step 1: the first communication device 100 transmits a pseudorandom sequence signal, which is used for measuring an isolation value between a sending antenna and a receiving antenna, based on a preset power value using the first antenna unit 101 on a channel of a first frequency band covered by an RF direct amplification transmission-way or on a second frequency band not used by the RF direct amplification transmission-way; or, the first communication device 100 transmits a beacon signal, which accords with the wireless communication technical specification, on a third frequency band based on a power P_out.

On the channel of the first frequency band covered by the RF direct amplification transmission-way or on the second frequency band not used by the RF direct amplification transmission-way, the specific method for sending the pseudorandom sequence signal comprises that: the first sending transmission-way baseband processing unit 110 in the first communication device 100 generates a pseudorandom sequence and performs pre-process of transmission, wherein the pre-process of transmission comprises one or more of the following processes: adding an identification number of the first communication device, up-conversion, power control; the pseudorandom sequence subjected to the pre-process of transmission is sent to the first RF sending transmission-way unit 108 via the first RF signal selection unit 109; the first RF sending transmission-way unit 108 amplifies an RF direct amplification signal from the second antenna unit 201 of the second communication device 200 and the pseudorandom sequence, and then transmits them out based on the power P_out on the channel of the first frequency band covered by the RF direct amplification transmission-way via the first antenna unit 101; or, the first RF sending transmission-way unit 108 amplifies the pseudorandom sequence and then transmits the pseudorandom sequence out based on the power P_out on the second frequency band via the first antenna unit 101.

The specific method for sending the beacon signal, which accords with the wireless communication technical specification, on the third frequency band comprises that: the beacon signal is sent by a beacon signal sending method of the wireless communication technical specification.

The second frequency band can be a frequency band occupied by other channels, also can be an idle frequency band.

Preferably, the second frequency band not used by the RF direct amplification transmission-way is a frequency band with a frequency lower than that of the first frequency band and with a frequency interval from the first frequency band less than one octave. Since the second frequency band has a lower frequency than that of the first frequency band, the isolation which can be obtained on the second frequency band is relatively lower; thus using the isolation on the second frequency band to control the gain of the RF direct amplification transmission-way would have more allowance of avoiding self-excitation.

The third frequency band is a frequency band used by the first communication device 100 according to an air interface which accords with the wireless communication technical specification.

Step 2: the second RF receiving transmission-way unit 202 in the second communication device 200 performs, on the channel of the first frequency band covered by the RF direct amplification transmission-way, low-noise amplification on the pseudorandom sequence received by the second antenna unit 201 and then sends the pseudorandom sequence subjected to the low-noise amplification to the second receiving transmission-way baseband processing unit 204, which then performs detection and power measurement on the pseudorandom sequence using the identification number of the first communication device to obtain a measured power P_ind; or, the second RF receiving transmission-way unit 202 in the second communication device 200 performs, on the second frequency band, low-noise amplification on the pseudorandom sequence received by the second antenna unit 201 and then sends the pseudorandom sequence subjected to the low-noise amplification to the second receiving transmission-way baseband processing unit 204, which then performs detection and power measurement on the pseudorandom sequence using the identification number of the first communication device to obtain a measured power P_ind; or, the second RF receiving transmission-way unit 202 in the second communication device 200 performs, on the third frequency band, low-noise amplification on the beacon signal received by the second antenna unit 201 and then sends the beacon signal subjected to the low-noise amplification to the second receiving transmission-way baseband processing unit 204, which then performs detection and power measurement on the beacon signal using the identification number of the first communication device to obtain a measured power P_ind.

Step 3: according to the P_out and the P_ind, an isolation value between the first antenna unit 101 of the first communication device 100 and the second antenna unit 201 of the second communication device 200 which are used by the RF direct amplification transmission-way is calculated. Specifically, the isolation is calculated according to the following formula:

$$ISO = 10 Log\ (P\_ind / P\_out)$$

wherein ISO represents the isolation value and Log represents logarithm.

Preferably, the isolation value on the third frequency band is corrected to obtain an estimate value ISO (E) of the sending-receiving isolation on the first frequency band. The specific estimation method comprises that: a difference between the third frequency band propagation loss C(L3) and the first frequency band propagation loss C(L1) is calculated, this difference is taken as a correction amount C(L) of the sending-receiving isolation on the first frequency band, and then the C(L) is added to or subtracted from the ISO measured on the third frequency band to obtain the estimate value ISO (E) of the sending-receiving isolation on the first frequency band.

Specifically, the operation mode management and control unit 105 or the operation mode control unit 205 executes the calculation above.

Step 4: the reconfigurable wireless node controls a gain of the RF direct amplification transmission-way on the first frequency band to be less than the measure isolation value between the receiving antenna and the sending antenna.

Specifically, the operation mode management and control unit 105 in the second communication device controls the gain of the RF direct amplification transmission-way from the second antenna unit 201 to the first antenna unit 101 to be one preset third threshold less than the sending-receiving isolation ISO actually measured on the first frequency band or the second frequency band or the third frequency band, or to be one preset third threshold less than the correction value ISO (E) of the sending-receiving isolation ISO actually measured on the second frequency band or the third frequency band.

The specific method for controlling the gain of the RF direct amplification transmission-way comprises that: the operation mode management and control unit 105 or the operation mode control unit 205 controls the gain of a second receiving transmission-way in the second communication device and/or a first sending transmission-way in the first communication device on the channel, which is covered by the RF direct amplification transmission-way and is on the first frequency band, to be one preset third threshold less than the sending-receiving isolation ISO or the correction value ISO (E) of the sending-receiving isolation.

Generally, the preset third threshold takes a value of 15dB.

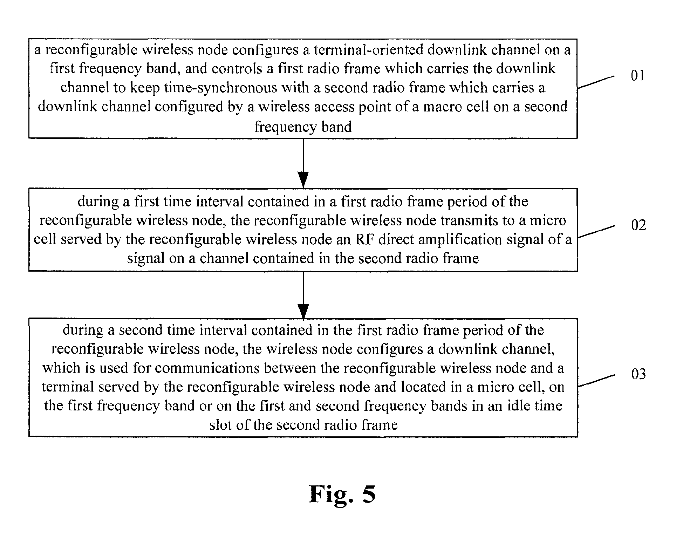

Based on the structure of the reconfigurable wireless node above, an embodiment of the present invention also provides a method for a reconfigurable wireless node of a micro cell to collaborate with a wireless access point of a macro cell, as shown in Fig. 5, the method mainly comprises the following steps.

Step 01: the reconfigurable wireless node configures a terminal-oriented downlink channel on a first frequency band, and controls a first radio frame which carries the downlink channel to keep time-synchronous with a second radio frame which carries a downlink channel configured by a wireless access point of a macro cell on a second frequency band.

The wireless access point of the macro cell is a base station of which the coverage area contains the location of the wireless node, or a combination of an antenna and a Remote Radio Unit (RRU) of a distributed type base station, or an active antenna of a distributed base station.

The first frequency band is one frequency range which is continuous in the frequency domain. A terminal-oriented communication device of the reconfigurable wireless node at least configures one downlink physical carrier on the first frequency band. The second frequency band is one frequency range which is continuous in the frequency domain. The wireless access point of the macro cell at least configures one downlink physical carrier on the second frequency band.

The first frequency band and the second frequency band are in one of the following three relationships.

The first kind of frequency band relationship is that the first frequency band has the same bandwidth as the second frequency band. In this condition, a cell synchronization signal transmitted by the wireless node on the first frequency band to a served terminal in the micro cell uses the same frequency as that used by a cell synchronization signal transmitted by the wireless access point of the macro cell on the second frequency band/the first frequency band to a served terminal in the macro cell; however, the wireless node and the wireless access point of the macro cell use independent physical carriers respectively.

The second kind of frequency band relationship is that the first frequency band is adjacent to the second frequency band in a frequency domain. In this condition, the wireless node transmits a cell synchronization signal to a served terminal in the micro cell on the first frequency band, and the wireless access point of the macro cell transmits a cell synchronization signal to a served terminal in the macro cell on the second frequency band.

The third kind of frequency band relationship is that the first frequency band is a sub-band of the second frequency band. In this condition, a cell synchronization signal transmitted by the wireless node on the first frequency band to a served terminal in the micro cell and a cell synchronization signal transmitted by the wireless access point of the macro cell on the second frequency band to a served terminal in the macro cell can use the same frequency, or different frequencies.

Preferably, in the condition that the second radio frame of the second frequency band has an idle time slot, the reconfigurable wireless node configures a downlink channel, which is used for performing communications with a terminal in a micro cell, on the second frequency band within the time interval corresponding to the idle time slot of the second radio frame. The process of configuring the downlink channel, which is used for performing communications with the terminal in the micro cell, on the second frequency band comprises one of the following methods.

1. The downlink channel is configured to be on an Orthogonal Frequency Division Multiplexing (OFDM)based time-frequency resource block on the second frequency band. At this moment the first radio frame is a radio frame containing a channel configured on the first frequency band and the second frequency band.

2. The downlink channel is configured to be on a physical carrier or a physical carrier group on the second frequency band, for example, a carrier or a carrier group of GSM. At this moment the first radio frame is a radio frame containing a channel configured on the first frequency band and the second frequency band, and the channel which is configured on the second frequency band and is contained in the first radio frame mentioned here refers to a channel configured on an idle time slot of the second radio frame.

The method of the reconfigurable wireless node configuring the channel, which is used for a terminal in a micro cell, on an idle time slot of the second radio frame comprises one of the following manners.

1. The same physical carrier is adopted to realize spectrum coverage on the idle time slot of the second radio frame on the first frequency band and the second frequency band, for example, the same physical carrier is used to generate an OFDM sub-carrier on the first frequency band and the second frequency band.

2. Different physical carriers are adopted to realize spectrum coverage on the idle time slot of the second radio frame on the first frequency band and the second frequency band respectively; for example, a carrier aggregation mode is adopted to realize spectrum coverage on the idle time slot of the second radio frame on the second frequency band.

The first radio frame is kept synchronous with the second radio frame, which carries the downlink channel configured by the wireless access point of the macro cell on the second frequency band, according to one of the following synchronization modes.

In the first radio frame synchronization mode, a start moment of a frame header of the first radio frame keeps consistent with a start moment of a frame header of the second radio frame, wherein keeping consistent refers that the time difference between a start moment of the frame header of the first radio frame leaving a terminal-oriented antenna aperture of a wireless communication device and an arrival moment of a frame header start point of the second radio frame arriving the location of the antenna is less than a predetermined first time threshold TH1(t), typically, the TH1(t) is less than 20 microseconds ($\mu$s).

In the second radio frame synchronization mode, the start moment of the frame header of the first radio frame and the start moment of the frame header of the second radio frame keep a fixed time difference therebetween, wherein keeping a fixed time difference refers that the time difference between the start moment of the frame header of the first radio frame leaving the terminal-oriented antenna aperture of the wireless communication device and the arrival moment of the frame header start point of the second radio frame arriving the location of the antenna is a fixed value F, typically, the fixed value F is an integral multiple of a time width of a time slot contained in a radio frame.

The operation of implementing the time synchronization between the first radio frame and the second radio frame which carries the downlink channel configured by the wireless access point of the macro cell on the second frequency band is described as follows.

The second communication device 200 in the reconfigurable wireless node detects a start moment T1 of the frame header of the second radio frame on the second frequency band and then sends the start moment T1 of the frame header of the second radio frame to the first communication device 100 through the second co-axial cable interface unit 207 and the first co-axial cable interface unit 107. The synchronization control subunit 113 in the first communication device 100 controls, according to the T1, the start moment of the first sending transmission-way baseband processing unit 110 sending a radio frame header to the first RF sending transmission-way unit 108, thereby implementing the frame header synchronization between the first radio frame and the second radio frame.

Preferably, the reconfigurable wireless mode also configures, on a third frequency band, an uplink channel used for receiving a signal from a terminal, wherein the radio frame which carries the uplink channel is called a third radio frame. The wireless access point of a macro cell also configures an uplink channel on a fourth frequency band, wherein the radio frame which carries the uplink channel configured on the fourth frequency band is called a fourth radio frame.

The third frequency band is one frequency range which is continuous in the frequency domain. A terminal-oriented communication device of the wireless node at least configures one uplink physical channel on the third frequency band. The fourth frequency band is one frequency range which is continuous in the frequency domain. The wireless access point of the macro cell at least configures one uplink physical channel on the fourth frequency band.

Corresponding to the three relationships between the first frequency band the second frequency band, one of the following relationships exists between the third frequency band and the fourth frequency band.

The first kind of frequency band relationship is that the third frequency band has the same bandwidth as the fourth frequency band. In this condition, the reconfigurable wireless node receives a signal from a terminal, which is in the micro cell served by the reconfigurable wireless node, on the third frequency band, that is, the fourth frequency band.

The second kind of frequency band relationship is that the third frequency band is adjacent to the fourth frequency band in a frequency domain. In this condition, the reconfigurable wireless node receives a signal from a terminal, which is in the micro cell served by the reconfigurable wireless node, on the third frequency band; in addition, in an idle time slot of the third radio frame, the reconfigurable wireless node receives a signal from a terminal, which is in the micro cell served by the reconfigurable wireless node, on the fourth frequency band.

The third frequency band relationship is that the third frequency band is a sub-band of the fourth frequency band. In this condition, the reconfigurable wireless node receives a signal from a terminal, which is in the micro cell served by the reconfigurable wireless node, on the third frequency band; in addition, in an idle time slot of the third radio frame, the reconfigurable wireless node receives a signal from a terminal, which is in the micro cell served by the reconfigurable wireless node, on the fourth frequency band.

Preferably, the third radio frame which carries the channel configured on the third frequency band keeps time-synchronous with the fourth radio frame which carries the channel configured on the fourth frequency band, wherein the time synchronization refers that the start moment of a frame header of the third radio frame on the first communication device 100 is the same as or close to the start moment of a frame header of the fourth radio frame on a wireless access point receiver of a macro cell.

Step 02: during a first time interval contained in a first radio frame period of the reconfigurable wireless node, the reconfigurable wireless node transmits, to a micro cell served by the reconfigurable wireless node, an RF direct amplification signal of a signal which is on a channel contained in the second radio frame.

Specifically, based on different air interface technologies configured on the first frequency band and the second frequency band, two different direct amplification modes as follows can be adopted.

If the air interfaces configured on the first frequency band and the second frequency band adopt a CDMA technology, and the first frequency band and the second frequency band are the same frequency band or the first frequency band is a part of the second frequency band, RF direct amplification is performed, during the first time interval, on a signal contained in the second radio frame configured by the access point of the macro cell on the first and second frequency bands. If the first frequency band and the second frequency band are adjacent, RF direct amplification is performed, during the first time interval, on a signal contained in the second radio frame configured by the access point of the macro cell on the second frequency band. Preferably, the first communication device 100 configures an uplink random access channel on the first frequency band to be staggered with or orthogonal to an uplink random access channel of the macro cell in time and/or frequency, so as to avoid that an access signal of a terminal to the micro cell interferes with the uplink random access channel of the access point of the macro cell. Preferably, when both the first communication device 100 and the access point of the macro cell need to send service data to a terminal on the first frequency band during the first time interval, the first communication device 100 stops sending an RF direct amplification signal on the first frequency band.

If the air interfaces configured on both the first frequency band and the second frequency band adopt an OFDM technology, and the first frequency band and the second frequency band are the same frequency band or the first frequency band is a part of the second frequency band, RF direct amplification is performed, during the first time interval, on a signal contained in the second radio frame configured by the access point of the macro cell on the first frequency band and the second frequency band, and the first communication device 100 configures a basic control channel on the first frequency band, for example, the basic control channel can be a cell synchronization channel, a cell broadcast channel, a random access channel. If the first frequency band and the second frequency band are adjacent, RF direct amplification is performed, during the first time interval, on a signal contained in the second radio frame configured by the access point of the macro cell on the second frequency band only. Preferably, the first communication device 100 configures an uplink random access channel on the first frequency band to be staggered with or orthogonal to an uplink random access channel of the macro cell in time and/or frequency, so as to avoid that an access signal of a terminal to the micro cell interferes with the uplink random access channel of the access point of the macro cell. Preferably, when both the first communication device 100 and the access point of the macro cell need to send service data to a terminal on the first frequency band during the first time interval, the first communication device 100 stops sending an RF direct amplification signal on the first frequency band.

The RF direct amplification signal of a signal on a channel contained in the second radio frame is sent by one of the following sending methods:

1. sending all signals on the second radio frame transmitted within the first time interval contained in the first radio frame period by an RF direct amplification method;
2. sending part signals on the second radio frame transmitted within the first time interval contained in the first radio frame period by an RF direct amplification method; typically, sending signals on a control channel of the second radio frame by an RF direct amplification method.

The specific control mode comprises downlink signal amplification and uplink signal amplification. The downlink signal direct amplification refers to the amplification of an RF signal from the receiving antenna of the second communication device 200 to the sending antenna of the first communication device 100. The implementation method of the downlink direct amplification comprises one or two of the following: (a) the operation mode management and control unit 105 controls the first RF signal selection unit 109, and/or the operation mode control unit 205 controls the second RF signal allocation unit 203 to implement a specific direct amplification mode for a specific RF signal; (b) the operation mode management and control unit 105 controls an output power of a power amplifier in the first RF sending transmission-way unit 108 of the first communication device 100 to be zero on a corresponding frequency band.

Preferably, during a third time interval contained in a third radio frame period of the reconfigurable wireless node, the reconfigurable wireless node receives a signal transmitted by an adjacent terminal of the reconfigurable wireless node on the fourth frequency band, performs RF direct amplification on the signal transmitted by the terminal on the fourth frequency band and then sends the processed signal to the wireless access point of the macro cell.

The uplink signal direct amplification refers to the amplification of an RF signal from the receiving antenna of the first communication device 100 to the sending antenna of the second communication 200. The implementation method of the uplink direct amplification comprises one or two of the following: (a) the operation mode management and control unit 105 controls the first RF signal allocation unit 103, and/or the operation mode control unit 205 controls the second RF signal selection unit 209 to implement a specific direct amplification mode for a specific RF signal; (b) the operation mode control unit 205 controls an output power of a power amplifier in the second RF sending transmission-way unit 208 of the second communication device 200 to be zero on a corresponding frequency band.

Step 03: during a second time interval contained in the first radio frame period of the reconfigurable wireless node, the reconfigurable wireless node configures a downlink channel used, which is used for communications between the wireless node and the terminal served by the reconfigurable wireless node and located in the micro cell, on the first frequency band or on the first frequency band and the second frequency band in an idle time slot of the second radio frame.

The first time interval and the second time interval contained in the first radio frame period are not overlapped.

A specific implementation method for scheduling a terminal on the first frequency band or on the first frequency band and the second frequency band comprises the following steps.

Step 1: a scheduler in the first communication device 100 acquires from the network side a location of an idle time slot of a radio frame of a wireless access network on the second frequency band.

The specific acquisition method comprises one of the following:

1. the wireless access network operating on the second frequency band sends the location of the idle time slot to the scheduler through an air interface on the second frequency band and a receiving transmission-way in the second communication device 200;

2. the wireless access network operating on the second frequency band sends the location of the idle time slot to the scheduler through a wired network coupled with the first communication device 100.

The second time interval is less than or equal to the total time width of the idle time slot.

Step 2: the scheduler in the first communication device 100 assigns time-frequency resources to a terminal served by the first communication device 100 on the first frequency band or on the first frequency band and the second frequency band during the idle time slot.

Preferably, during the second time interval contained in the first radio frame period, the wireless node terminates the RF direct amplification which is performed for a signal on the second frequency band carrying the second radio frame. The specific method for terminating the RF direct amplification is to make an output power of an RF direct amplifier, which operates on the second frequency band and transmits a signal to the micro cell covered by the reconfigurable wireless node, be zero.

Besides the first implementation method above, preferably, during a fourth time interval contained in a third radio frame period of the reconfigurable wireless node, the reconfigurable wireless node configures an uplink channel, which is used for communications between the wireless node and a terminal served by the reconfigurable wireless node and located in the micro cell, on the third frequency band or on the third frequency band and the fourth frequency band in an idle time slot of the fourth radio frame.

The third time interval and the fourth time interval contained in the third radio frame period are not overlapped.

A specific implementation method for assigning uplink resources for a terminal on the third frequency band or on the third frequency band and the fourth frequency band comprises the following steps.

Step 1: a scheduler in the first communication device 100 acquires from the network side a location of an idle time slot of a radio frame of a wireless access network on the fourth frequency band.

The specific acquisition method comprises one of the following:

1. the wireless access network operating on the second frequency band sends the location of the idle time slot to the scheduler through an air interface on the second frequency band and a receiving transmission-way in the second communication device 200;

2. the wireless access network operating on the second frequency band sends the location of the idle time slot to the scheduler through a wired network coupled with the first communication device 100.

The fourth time interval is less than or equal to the total time width of the idle time slot.

Step 2: the scheduler in the first communication device 100 assigns time-frequency resources to a terminal served by the first communication device 100 on the third frequency band or on the third frequency band and the fourth frequency band during the idle time slot.

Preferably, during the fourth time interval contained in the third radio frame period, the reconfigurable wireless node terminates the RF direct amplification which is performed for a signal on the fourth frequency band carrying the fourth radio frame. The specific method for terminating the RF direct amplification is to make an output power of an RF direct amplifier, which receives a signal from the micro cell covered by the wireless node on the fourth frequency band and sends the signal subjected to the direct amplification to the macro cell wireless node, be zero.

In combination with Step 01 and Step 03, further, the reconfigurable wireless node performs RF direct amplification on the second frequency or on an adjacent frequency band of the second frequency band. The specific method for implementing the RF direct amplification comprises one of the following:

1. performing equal-amplitude amplification for channels on different frequency bands;

2. performing unequal-amplitude amplification for channels on different frequency bands, wherein the specific implementation method is to reduce in turn, from the second frequency band to an adjacent frequency band thereof and to an adjacent frequency band of the adjacent frequency band of the second frequency band, the amplification amount of an RF signal on the frequency band.

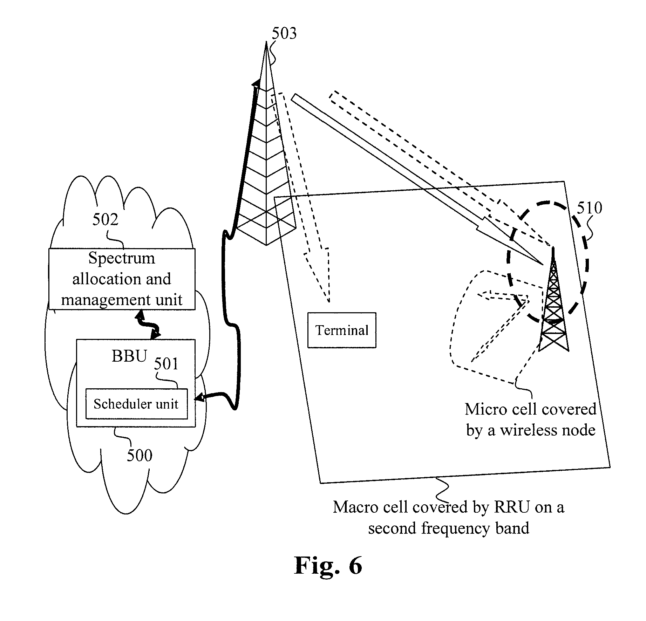

In addition, an embodiment of the present invention provides a communication system containing a reconfigurable wireless node of a micro cell and a wireless access point of a macro cell. As shown in Fig. 6, the system comprises: at least one baseband processing unit (BBU) 500, at least one RRU 503, at least one spectrum allocation and management unit 502 and at least one reconfigurable wireless node 510. The system further comprises one or more mobile terminals.

The BBU 500 comprises a scheduler unit 501 which performs scheduling control for a terminal on frequency band resources allocated by the spectrum allocation and management unit 502.

The RRU 503 comprises an RF transmission-way and an antenna unit which can be a traditional antenna-RRU separate structure, also can be an active antenna structure.

The spectrum allocation and management unit 502 allocates usable frequency band resources for the scheduler unit 501 in the BBU 500. Specifically, the spectrum allocation and management unit 502 divides one second frequency band into two parts in time, and the RRU 503 which covers the macro cell and the reconfigurable wireless node 510 which covers the micro cell use the second frequency band in a manner of time division multiplexing.

The reconfigurable wireless node 510 is the composition shown in Fig. 3, comprising the terminal-oriented wireless communication device 100, the wireless access network-oriented wireless communication device 200 and the co-axial cable 300.

The operating features of this system are described as follows.

The spectrum allocation and management unit 502 on the network side allocates a same second frequency band between one RRU 503 and a reconfigurable wireless node 510 in a manner of time division multiplexing, wherein the reconfigurable wireless node 510 sharing the second frequency band with the RRU 503 can be one or more in quantity. The spectrum allocation and management unit 502 on the network side sends to the BBU 500 the number of slots, which can be used by the BBU 500 in a radio frame sent by the RRU 503 on the second frequency band, and location information of the slots. The scheduler unit 501 in the BBU 500 assigns resources on the second frequency band for a terminal according to the number of slots that can be used and the location information of the slots.

Preferably, the network side sends to the reconfigurable wireless node 510 the number of the slots the BBU 500 can use and the location information of the slots; or the network side sends to the reconfigurable wireless node 510 the number of slots, which can be used on the second frequency band by an air interface of the terminal-oriented wireless communication device 100, and the location information of the slots.

Preferably, the network side sends to the reconfigurable wireless node 510 the number of slots, which can be used on the second frequency band by an air interface of the terminal-oriented wireless communication device 100 of the reconfigurable wireless node 510, location information of the slots and the location of usable frequency resources on the slots. The location of the frequency resources is an OFDM time-frequency resource block location or a GSM carrier frequency location.

The spectrum allocation and management unit 502 on the network side performs statistics and management for the number of slots, which belongs to the second frequency band and can be used by the reconfigurable wireless node 510, the location information of the slots and the location of usable frequency resources on the slots.

The spectrum allocation and management unit 502 on the network side performs management for the sending of the number of slots belonging to the second frequency band, the location information of the slots and the location of usable frequency resources on the slots. The specific sending method comprises one of the following:

1. the network side sends the information to the reconfigurable wireless node 510 on the second frequency band using the RRU 503;
2. the network side sends the information to the reconfigurable wireless node 510 on a backhaul frequency band using the RRU 503;
3. the network side sends the information to the reconfigurable wireless node 510 using a wired interface 301 of the reconfigurable wireless node 510.

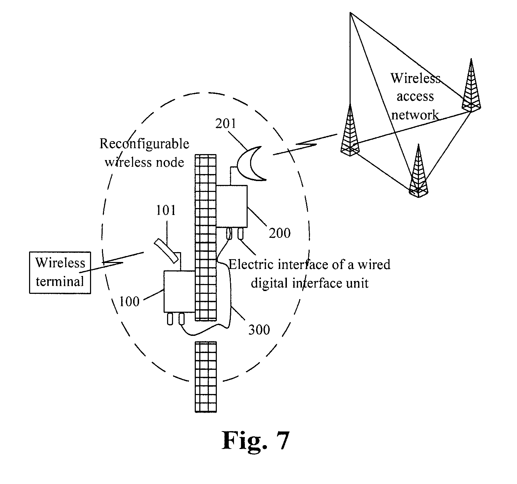

An implementation of the structure of the reconfigurable wireless node 510 with configurable operation mode in the embodiment of the present invention is as shown in Fig. 7. In this embodiment, a first communication device 100 serves as an indoor access point, and a second communication device serves as an outdoor installed communication device. The first communication device 100 installed indoors and the second communication device 200 installed outdoors are coupled through a co-axial cable 300, wherein the co-axial cable 300 penetrates a wall through a wire hole of an air conditioner external unit on the wall.

An analog channel contained in the co-axial cable 300 is used to transmit an RF signal, which is subjected to low-noise amplification, transmitted from a cellular network or a territorial television broadcast network and received by a second antenna unit 201 of the second communication device 200 orienting to a wireless access network (for example, orienting to an LTE base station, a territorial television broadcast transmitter), to a first RF sending transmission-way unit 108 of the first communication device 100. The RF signal is then transmitted to a first antenna unit 101 after power amplification. A digital channel contained in the co-axial cable 300 is used to transmit control information and data from the first communication device 100 to the second communication device, or from the second communication device 200 to the first communication device 100. The function of configuring a digital channel in the co-axial cable 300 is to implement the support of multi-antenna using only one co-axial cable 300 in the second communication device 200 and/or the first communication 100 in the condition that the second communication device 200 and/or the first communication device 100 adopt(s) multi-antenna. If no digital channel is configured in the co-axial cable 300, each independent antenna unit contained in the second antenna unit 201 needs to transmit a precoding signal using a single co-axial cable, which results in an increase in volume, cost and deployment difficulty.

In this embodiment, the first antenna unit 101 contained in the first communication device 100 contains two antennas configured with an independent RF receiving/sending transmission-way. A first RF receiving transmission-way unit 102 contained in the first communication device 100 supports the following transmission-way configurations at the same time or at divided times:

1. two independent receiving transmission-ways operating on an LTE TDD permitted frequency band;

2. two independent receiving transmission-ways operating on an LTE Frequency Division Duplex (FDD) permitted frequency band;

3. two independent receiving transmission-ways operating on a UMTS permitted frequency band;

4. two independent receiving transmission-ways operating on a Wi-Fi permitted frequency band.

The receiving transmission-ways are implemented by adopting a commercial receiving chip, wherein each operating mode or whether to operate is controlled by an operation mode management and control unit 105. Preferably, in the future a receiving chip which can uniformly cover a plurality of different systems, for example, simultaneously cover operating frequency bands of LTE TDD and LTE FDD, can be adopted to implement the receiving transmission-ways.

For a first RF signal allocation unit 103 contained in the first communication device 100, the core of implementing RF allocation is a set of RF switches, wherein a transmission-way of RF signals is controlled by controlling the connection and disconnection of the RF switch.

A first receiving transmission-way baseband processing unit 104 contained in the first communication device 100 supports the receiving process of signals which accord with the following communication protocols at the same time or at divided times:

1. LTE TDD base station technical specification;
2. LTE FDD base station technical specification;
3. UMTS base station technical specification;
4. Wi-Fi access point technical specification.

The technical specifications can be implemented by adopting a commercial baseband processing chip, wherein each operating mode being started or not is controlled by an operation mode management and control unit 105. Preferably, in the future a chip which can uniformly implement a plurality of technical specifications, for example, simultaneously implement technical specifications of LTE TDD and LTE FDD, can be adopted to implement the technical specifications.

The operation mode management and control unit 105 contained in the first communication device 100 accomplishes the operating mode management and control of the communication device 510 in the embodiments of the present invention, for example, management of a territorial television broadcast frequency band needing RF direct amplification, management on whether to start a specific air interface on a specific frequency band, control of synchronization relationship between an air interface radio frame of the first communication device 100 and an LTE/UMTS radio frame at the wireless access network side, and management of an operation mode control unit 205 contained in the second communication device 200.

A specific interface drive protocol adopted by a first interface drive unit 106 contained in the first communication device 100 is an Ethernet protocol and an Asymmetrical Digital Subscriber Loop (ADSL) transmission protocol. The Ethernet protocol is used for sending control information and data between the first communication device 100 and the second communication device 200, and/or for communications between the first communication device 100 and a family wired network in which a co-axial cable serves as a transmission medium. The ADSL transmission protocol is used for communications between the first communication device 100 and a family wired network in which a twist-pair serves as a transmission medium.

A first co-axial cable interface unit 107 contained in the first communication device 100 is a co-axial cable coupler.

A first RF sending transmission-way unit 108 contained in the first communication device 100 supports the following transmission-way configurations at the same time or at divided times:

1. two independent sending transmission-ways operating on an LTE TDD permitted frequency band;
2. two independent sending transmission-ways operating on an LTE FDD permitted frequency band;
3. two independent sending transmission-ways operating on a UMTS permitted frequency band;
4. two independent sending transmission-ways operating on a Wi-Fi permitted frequency band.

The sending transmission-ways are implemented by adopting a commercial receiving chip, wherein each operating mode or whether to operate is controlled by the operation mode management and control unit 105. Preferably, in the future a sending chip which can uniformly cover a plurality of different systems, for example, simultaneously cover operating frequency bands of LTE TDD and LTE FDD, can be adopted to implement the sending transmission-ways.

For a first RF signal selection unit 109 contained in the first communication device 100, the core of implementing RF selection is a set of RF switches, wherein a transmission-way of RF signals is controlled by controlling the connection and disconnection of the RF switch.

A first sending transmission-way baseband processing unit 110 contained in the first communication device 100 supports the receiving process of signals which accord with the following communication protocols at the same time or at divided times:

1. LTE TDD base station technical specification;
2. LTE FDD base station technical specification;
3. UMTS base station technical specification;
4. Wi-Fi access point technical specification;

The technical specifications can be implemented by adopting a commercial baseband processing chip which is designed in combination with the first receiving transmission-way baseband processing unit 104, wherein each operating mode or whether to operate is controlled by the operation mode management and control unit 105. Preferably, in the future a chip which can uniformly implement a plurality of technical specifications, for example, simultaneously implement technical specifications of LTE TDD and LTE FDD, can be adopted to implement the technical specifications.

The operation mode management and control unit 105 contained in the first communication device 100 further comprises: a first RF direct amplification control unit 111, a first RF transmission-way and baseband processing configuration unit 112 and a first synchronization control unit 113. These functional units can be implemented in one physical entity, for example, implemented by adopting a same processor, also can be implemented in different physical entities or functional entities.

In this embodiment, a second antenna unit 201 contained in the second communication device 200 contains four antennas configured with an independent RF receiving/sending transmission-way.

A second RF receiving transmission-way unit 202 contained in the second communication device 200 supports the following transmission-way configurations at the same time or at divided times:

> 1. four independent receiving transmission-ways operating on an LTE TDD permitted frequency band;
> 2. four independent receiving transmission-ways operating on an LTE FDD permitted frequency band;
> 3. four independent receiving transmission-ways operating on a UMTS permitted frequency band;
> 4. four independent receiving transmission-ways operating on a territorial television broadcast permitted frequency band, wherein the four independent receiving transmission-ways can be configured on the same territorial television broadcast channel, also can be configured on different territorial television broadcasts channels.

The receiving transmission-ways are implemented by adopting a commercial receiving chip, wherein each operating mode or whether to operate is controlled by an operation mode control unit 205. Preferably, in the future a receiving chip which can uniformly cover a plurality of different systems, for example, simultaneously cover operating frequency bands of LTE TDD and LTE FDD, can be adopted to implement the receiving transmission-ways.

For a second RF signal allocation unit 203 contained in the second communication device 200, the core of implementing RF allocation is a set of RF switches, wherein a transmission-way of RF signals is controlled by controlling the connection and disconnection of the RF switch.

A second receiving transmission-way baseband processing unit 204 contained in the second communication device 200 supports the receiving process of signals which accord with the following communication protocols at the same time or at divided times:

> 1. LTE TDD terminal technical specification;
> 2. LTE FDD terminal technical specification;
> 3. UMTS terminal technical specification;
> 4. Territorial television broadcast or satellite television broadcast terminal technical specification.

The technical specifications can be implemented by adopting a commercial baseband processing chip, wherein each operating mode being started or not is controlled by an operation mode control unit 205. Preferably, in the future a chip which can uniformly implement a plurality of technical specifications, for example, simultaneously implement technical specifications of LTE TDD and LTE FDD, can be adopted to implement the technical specifications.

The operation mode control unit 205 contained in the second communication device 200 accomplishes the operating mode control of the communication device 510 in the embodiments of the present invention, for example, management of a territorial television broadcast frequency band needing RF direct amplification, management on whether to start a specific air interface on a specific frequency band, control of synchronization relationship between an air interface radio frame of the second communication device 200 and an LTE/UMTS radio frame at the wireless access network side. The operation mode control unit 205 accepts the management from the operation mode management and control unit 105 contained in the first communication device 100.

A specific interface drive protocol adopted by a second interface drive unit 206 contained in the second communication device 200 is an Ethernet protocol. The Ethernet protocol is used for sending control information and data between the first communication device 100 and the second communication device 200.

A second co-axial cable interface unit 207 contained in the second communication device 200 is a co-axial cable coupler.

A second RF sending transmission-way unit 208 contained in the second communication device 200 supports the following transmission-way configurations at the same time or at divided times:

> 1. four independent sending transmission-ways operating on an LTE TDD permitted frequency band;
> 2. four independent sending transmission-ways operating on an LTE FDD permitted frequency band;
> 3. four independent sending transmission-ways operating on a UMTS permitted frequency band;
> 4. four independent sending transmission-ways operating on a wireless fixed access system permitted frequency band.

The sending transmission-ways are implemented by adopting a commercial receiving chip, wherein each operating mode being started or not is controlled by the operation mode control unit 205. Preferably, in the future a sending chip which can uniformly cover a plurality of different system permitted frequency bands, for example, simultaneously cover operating frequency bands of LTE TDD and LTE FDD, can be adopted to implement the sending transmission-ways.

For a second RF signal selection unit 209 contained in the second communication device 200, the core of implementing RF selection is a set of RF switches, wherein a transmission-way of RF signals is controlled by controlling the connection and disconnection of the RF switch.

A second sending transmission-way baseband processing unit 210 contained in the second communication device 200 supports the receiving process of signals which accord with the following communication protocols at the same time or at divided times:

1. LTE TDD terminal technical specification;
2. LTE FDD terminal technical specification;
3. UMTS terminal technical specification;
4. Wireless fixed access system terminal technical specification.

The terminal technical specifications can be implemented by adopting a commercial baseband processing chip which is comprehensively designed within the second receiving transmission-way baseband processing unit 204, wherein each operating mode being started or not is controlled by the operation mode control unit 205. Preferably, in the future a chip which supports a plurality of different technical specifications, for example, simultaneously support terminal technical specifications of LTE TDD and LTE FDD, can be adopted to implement the terminal technical specifications.

Preferably, the second receiving transmission-way baseband processing unit 204, besides executing the communication technical specifications above, also executes a needed measurement function for receiving-sending isolation between the first antenna unit 101 and the second antenna unit 102.

The operation mode control unit 205 contained in the second communication device 200 further comprises: a second RF direct amplification control sub-unit 211, a second RF transmission-way and baseband processing configuration sub-unit 212 and a synchronization signal extraction sub-unit 213. These functional units can be implemented in one physical entity, for example, implemented by adopting a same processor, also can be implemented in different physical entities or functional entities.

The second communication device 200 acquires synchronization time information of a radio frame, that is, a start time of an LTE FDD radio frame header, from a downlink channel transmitted by a macro base station in an LTE FDD system, and sends the start time of the LTE FDD radio frame header to a synchronization control sub-unit 113 contained in the first communication device 100 which implements micro cell coverage by adopting an LTE TDD mode. The first sending transmission-way baseband processing unit 110 contained in the first communication device 100, under the control of the synchronization control sub-unit 113, implements the time synchronization between an LTE TDD radio frame and an LTE FDD radio frame. The specific synchronization method comprises: a fixed time difference is kept between the start time of a header of the LTE TDD radio frame and the start time of the LTE FDD radio frame, wherein the time difference is an integral multiple of a time width of a slot contained in a radio frame. Mutual synchronization is realized among a group of radio frames which are transmitted by the first communication device 100 and keep a fixed time difference with the LTE FDD radio frame, meanwhile the fixed time difference kept between the start time of the header of the LTE TDD radio frame and the start time of the LTE FDD radio frame also provides convenience for a terminal synchronizing to the LTE FDD radio frame to access an LTE TDD channel quickly.

In this embodiment, sending-receiving isolation between the first antenna unit 101 and the second antenna unit 201 is measured adopting the following methods:

the first communication device 100 transmits a predicted signal sequence, that is, a pseudorandom sequence, on an idle television broadcast frequency band B1 using the first antenna unit 101, wherein the predicted signal sequence is used for measuring the sending-receiving isolation, and the transmit power is P_out;

the second receiving transmission-way baseband processing unit 204 in the second communication device 200 measures an RF power P_ind of the pseudorandom sequence signal coupled to the second antenna unit 201; then the second receiving transmission-way baseband processing unit 204 calculates the isolation according to the following formula:

$$ISO = 10 Log\,(P\_ind/P\_out)$$

wherein ISO represents the isolation and Log represents logarithm.

When performing RF signal direct amplification on a channel, the operation mode management and control unit 105 controls a gain of an RF direct amplification transmission-way from the second antenna unit 201 to the first antenna unit 101 to be 15dB less than the ISO, so as to guarantee that the RF direct amplification transmission-way is not self-excited.

In this embodiment, data transmission from a wireless access network to a wireless terminal can be implemented according to one or a combination of several of the following:

a first operating mode, in which the second communication device 200 and the first communication device 100 operate in a manner of direct amplification on a television broadcast frequency band, or a cellular mobile communication frequency band, or a Multimedia Broadcast Multicast Service (MBMS) occupied carrier channel;

a second operating mode, in which on one or more of the following frequency bands, the second communication device 200 operates according to an air interface technology specified by the frequency band:

1. LTE/LTE-A permitted frequency band;
2. UMTS permitted frequency band;
3. GSM permitted frequency band;
4. Wireless fixed access system permitted frequency band.

On one or more of the following frequency bands, the first communication device 100 operates according to an air interface technology specified by the frequency band:

1. LTE/LTE-A permitted frequency band;
2. UMTS permitted frequency band;
3. GSM permitted frequency band;
4. Wireless fixed access system permitted frequency band;
5. Permit-free frequency band, for example, operating according to a Wi-Fi wireless local area network technical specification on a permit-free frequency band.

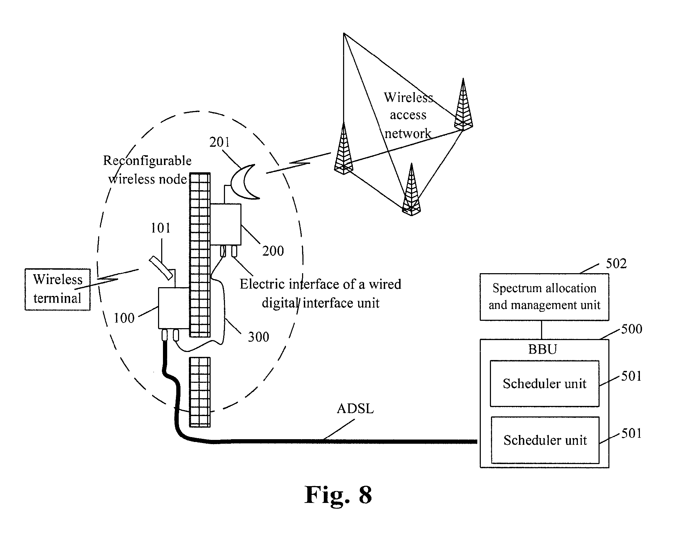

Preferably, another implementation of the wireless node 510 described in the embodiment of the present invention is: establishing a communication channel between the first communication device 100 and an ADSL wired network using an interface 301, wherein the specific implementation is as shown in Fig. 8.

Preferably, the implementation shown in Fig. 8 can flexibly implement cooperative transmission of a wired network and a wireless network, for example, in the condition that a service data stream needed by a terminal served by the first communication device 100 can not be provided relying on a single wired ADSL or a single air interface of the second communication device 200, parallel double-stream transmission of the wired ADSL and the LTE FDD is adopted to achieve the transmission rate required by the terminal.

In the embodiment described below, the reconfigurable wireless node with configurable operating mode is applied in an access network formed by an LTE/UMTS dual-mode system.

In the system shown in Fig. 8, the BBU 500 at the wireless access network side is a dual-mode baseband processor formed by LTE FDD and UMTS WCDMA, and the RRU and the antenna assembly 503 at the wireless access network side support parallel operation of dual-mode air interfaces formed by LTE FDD/TDD and UMTS WCDMA, wherein LTE TDD is applied to an LTE FDD air interface of the reconfigurable wireless node 510 to realize backhaul covered by a micro cell, LTE FDD or LTE TDD is applied to a UMTS air interface of the reconfigurable wireless node 510 to realize backhaul covered by a micro cell. The antenna of the second communication device 200 in the reconfigurable wireless node 510 faces the antenna of the RRU and the antenna assembly 503, and communicates with the RRU and the antenna assembly 503 using a UMTS frequency band and an LTE frequency band. The antenna of the first communication device 100 in the reconfigurable wireless node 510 faces a terminal in the micro cell and communicates with the terminal in the micro cell using the UMTS frequency band and/or the LTE frequency band during a second time interval. The spectrum allocation and management unit 502 manages an occupation ratio of a UMTS downlink channel to a frequency band UMTS_1 and a usage ratio of an LTE downlink channel to a frequency band LTE_1.

A specific spectrum management method adopted by the spectrum allocation and management unit 502 is described as follows. 1. The size of a first time interval in one UMTS air interface radio frame is allocated for a scheduler 501a; UMTS can only configure a service channel of the UMTS during the first time interval, and the channel of the UMTS is in an idle state during a second time interval; and the first communication device 100 of the reconfigurable wireless node 510 configures a service channel on the frequency band UMTS_1 during the second time interval. 2. The size of a first time interval in one LTE air interface radio frame is allocated for a scheduler 501b; the LTE air interface can only configure a service channel of the LTE air interface during the first time interval, and the channel of the LTE air interface is in an idle state during a second time interval; and the first communication device 100 of the wireless node 510 configures a service channel on the frequency band LTE_1 during the second time interval.

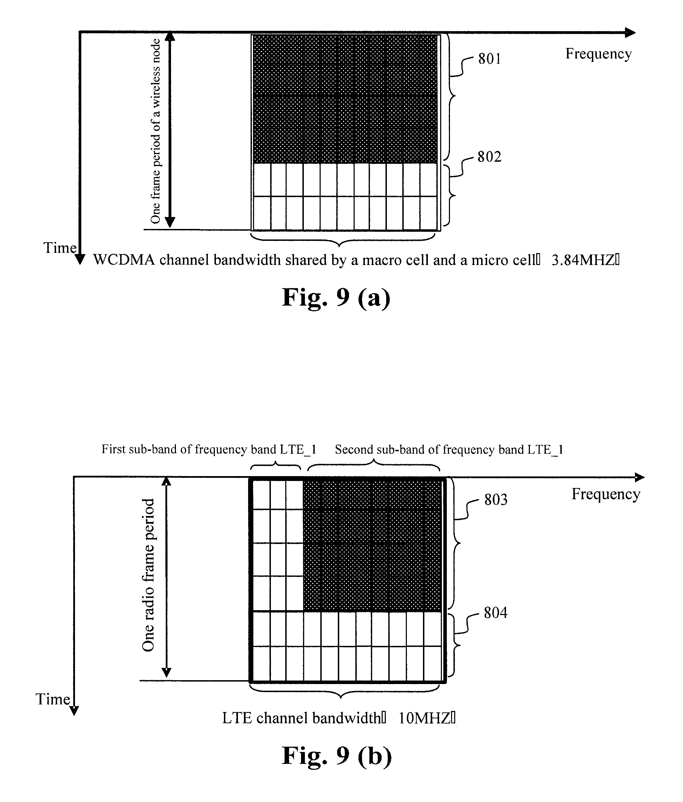

As shown in Fig. 9 (a), during a first time interval 801 of a radio frame, the UMTS air interface of the first communication device 100 of the reconfigurable wireless node 510 performs RF direct amplification, on the frequency band UMTS_1, for a UMTS air interface signal used for the macro cell coverage, and linearly superposes a UMTS air interface signal of the first communication device 100 and the UMTS air interface signal subjected to the RF direct amplification and used for covering the macro cell based on a preset power or amplitude proportion to send to the micro cell through the first antenna unit 101, wherein the preset power or amplitude proportion is 1:1, and configures a channel for a terminal on the frequency band UMTS_1 during a second time interval 802. Data transmitted during the second time interval 802 is from an LTE FDD macro cell air interface.

The LTE FDD air interface of the first communication device 100 in the reconfigurable wireless node 510 establishes a micro cell channel in a first sub-band of the frequency band LTE_1; the LTE FDD macro cell air interface establishes a macro cell channel in a second sub-band of the frequency band LTE_1. During a first time interval 803 of a radio frame of the LTE FDD air interface of the first communication device 100 serving a micro cell, as shown in Fig. 9 (b), the reconfigurable wireless node 510 performs RF direct amplification, on the second sub-band of the frequency band LTE_1, for a downlink channel of the LTE FDD air interface for covering a macro cell; during a second time interval 804, the reconfigurable wireless node 510 configures a downlink channel for a terminal served by the reconfigurable wireless node 510 on the second sub-band of the frequency band LTE_1. Besides, the first communication device 100 transmits physical carriers on the second sub-band of the frequency band LTE_1.

The above are the preferable embodiments of the present invention only, and are not intended to limit the protection scope of the present invention.

## Claims

1. A reconfigurable wireless node, **characterized by** comprising: a first communication device, a second communication device, and a co-axial cable providing an analog channel and a digital channel for communications between the first communication device and the second communication device, wherein the analog channel is configured to transmit a Radio Frequency (RF) signal from a receiving antenna of the first communication device to a sending antenna of the second communication device by an RF direct amplification method, or transmit an RF signal from a receiving antenna of the second communication device to a sending antenna of the first communication device by the RF direct amplification method; and the digital channel is configured to transmit control information and data from the first communication device to the second communication device, or from the second communication device to the first communication device.

2. The reconfigurable wireless node according to claim 1, **characterized in that** the first communication device comprises: a first antenna unit, a first RF receiving transmission-way unit, a first RF signal allocation unit, a first receiving transmission-way baseband processing unit, an operation mode management and control unit, a first interface drive unit, a first co-axial cable interface unit, a first RF sending transmission-way unit, a first RF signal selection unit and a first sending transmission-way baseband processing unit, wherein

the first antenna unit is configured to transmit a signal to a micro cell covered by the first communication device and/or receive a signal from the micro cell;

the first RF receiving transmission-way unit is configured to perform filtering and low-noise amplification on the signal received by the first antenna unit;

the first RF signal allocation unit is configured to allocate an RF signal output from the first RF receiving transmission-way unit between the first receiving transmission-way baseband processing unit and the analog channel contained in the first co-axial cable interface unit;

the first receiving transmission-way baseband processing unit is configured to perform baseband processing on the RF signal allocated by the first RF signal allocation unit;

the operation mode management and control unit is configured to manage an operation mode of the first communication device and the second communication device and control an operation state of the first communication device;

the first interface drive unit is configured to perform data communication between the first communication device and the second communication device through a data transmission-way of the co-axial cable;

the first co-axial cable interface unit is configured to be coupled with the first interface drive unit and perform communications with the second communication device, a local area network or a hybrid fibre coax network through the co-axial cable;

the first RF sending transmission-way unit is configured to transmit a signal to the micro cell covered by the first communication device through the first antenna unit;

the first RF signal selection unit is configured to control an input of a transmitted signal to the first RF sending transmission-way unit; and

the first sending transmission-way baseband processing unit is configured to perform baseband processing on the signal transmitted to the micro cell.

3. The reconfigurable wireless node according to claim 2, **characterized in that** the management of the operation mode of the first communication device and the second communication device comprises at least one of the following: RF signal direct amplification configuration management, receiving-sending isolation measurement management, RF transmission-way and baseband processing configuration management.

4. The reconfigurable wireless node according to claim 3, **characterized in that** the operation mode management and control unit comprises: a first RF direct amplification control sub-unit, a first RF transmission-way and baseband processing configuration sub-unit and a synchronization control sub-unit, wherein

the first RF direct amplification control sub-unit is configured to perform the RF signal direct amplification configuration management for the first communication device and the second communication device;

the first RF transmission-way and baseband processing configuration sub-unit is configured to perform the RF transmission-way and baseband processing configuration management for the first communication device and the second communication device; and

the synchronization control sub-unit is configured to control a radio frame transmitted by the first communication device on a specific channel to be synchronous with a radio frame transmitted by an access point of a macro cell of a wireless access network or a terrestrial television broadcast transmitter on a frequency band of the specific channel or other frequency bands.

5. The reconfigurable wireless node according to any of claims 1 to 4, **characterized in that** the first communication device further comprises: an interface unit communicated with a wired network; and the interface unit is configured to transmit control signalling and service data between the first communication device and a twisted-pair-based wired network.

6. The reconfigurable wireless node according to claim 1, **characterized in that** the second communication device comprises: a second antenna unit, a second RF receiving transmission-way unit, a second RF signal allocation unit, a second receiving transmission-way baseband processing unit, an operation mode control unit, a second interface drive unit, a second co-axial cable interface unit, a second RF sending transmission-way unit, a second RF signal selection unit and a second sending transmission-way baseband processing unit, wherein

the second antenna unit is configured to transmit a signal to a wireless access network and/or receive a signal from the wireless access network;

the second RF receiving transmission-way unit is configured to perform filtering and low-noise amplification on the signal received by the second antenna unit;

the second RF signal allocation unit is configured to allocate an RF signal output from the second RF receiving transmission-way unit between the second receiving transmission-way baseband processing unit and the analog channel contained in the second co-axial cable interface unit;

the second receiving transmission-way baseband processing unit is configured to perform baseband processing on the RF signal allocated by the second RF signal allocation unit;

the operation mode control unit is configured to control an operation state of the second communication device;

the second interface drive unit is configured to perform data communication between the second communication device and the first communication device through a data transmission-way of the co-axial cable;

the second co-axial cable interface unit is configured to be coupled with the second interface drive unit and perform communications with the first communication device, a local area network or a hybrid fibre coax network through the co-axial cable;

the second RF sending transmission-way unit is configured to transmit a signal to an access point of the wireless access network through the second antenna unit;

the second RF signal selection unit is configured to control an input of a transmitted signal to the second RF sending transmission-way unit; and

the second sending transmission-way baseband processing unit is configured to perform baseband processing on the signal transmitted to the access point of the wireless access network.

7. The reconfigurable wireless node according to claim 6, **characterized in that** the control of the operation state of the second communication device comprises at least one of the following: synchronization signal extraction, RF signal direct amplification operation mode control.

8. The reconfigurable wireless node according to claim 2 or 6, **characterized in that** the first RF receiving transmission-way unit and the second RF receiving transmission-way unit comprise one or more RF receiving transmission-ways; and the first RF sending transmission-way unit and the second RF sending transmission-way unit comprise one or more RF sending transmission-ways.

9. The reconfigurable wireless node according to claim 2 or 6, **characterized in that** the first interface drive unit of the first communication device and the second interface drive unit of the second communication device collaborate with each other to implement data communication between the first communication device and the second communication device through the digital channel of the co-axial cable; and the data communication between the first communication device and the second communication device comprises:

configuring a first channel on a first frequency band of the co-axial cable and configuring a second channel on a second frequency band, wherein the first channel configured on the first frequency band is a channel with a fixed operating frequency, and the second frequency band is one frequency band with a changeable frequency location and/or a changeable frequency band width;

during a first time interval, the first interface drive unit and the second interface drive unit using the first channel to transmit frequency location information of the second channel, or using the first channel to transmit information about a frequency location and a channel width of the second channel;

during a second time interval, the first interface drive unit and the second interface drive unit using the second channel on the second frequency band to transmit service data and/or wireless node control information between a terminal and a wireless access network.

10. A method for a reconfigurable wireless node to collaborate with a wireless access point of a macro cell, **characterized in that** the method comprises:

the reconfigurable wireless node configuring a terminal-oriented downlink channel on a first frequency band, and controlling a first radio frame which carries the downlink channel to keep time-synchronous with a second radio frame which carries a downlink channel configured by the wireless access point of the macro cell on a second frequency band;

during a first time interval contained in a first radio frame period of the reconfigurable wireless node, the reconfigurable wireless node sending, to a micro cell served by the reconfigurable wireless node, a Radio Frequency (RF) direct amplification signal of a signal which is on a channel contained in the second radio frame; and

during a second time interval contained in the first radio frame period of the reconfigurable wireless node, the reconfigurable wireless node configuring a downlink channel, which is used for communications between the reconfigurable wireless node and a terminal served by the reconfigurable wireless node and located in the micro cell, on the first frequency band or on the first frequency band and the second frequency band in an idle time slot of the second radio frame.

11. The method for a reconfigurable wireless node to collaborate with a wireless access point of a macro cell according to claim 10, **characterized in that** the first frequency band and the second frequency band are in one of the following relationships:

the first frequency band has a same bandwidth as the second frequency band;
the first frequency band is adjacent to the second frequency band in a frequency domain;
the first frequency band is a sub-band of the second frequency band.

12. The method for a reconfigurable wireless node to collaborate with a wireless access point of a macro cell according to claim 10 or 11, **characterized in that** the first radio frame which carries the downlink channel keeping time-synchronous with the second radio frame which carries the downlink channel configured by the wireless access point of the macro cell on the second frequency band comprises:

keeping a start moment of a frame header of the first radio frame consistent with a start moment of a frame header of the second radio frame; or, keeping a fixed time difference between the start moment of the frame header of the first radio frame and the start moment of the frame header of the second radio frame.

13. The method for a reconfigurable wireless node to collaborate with a wireless access point of a macro cell according to claim 10 or 11, **characterized in that** the step of the reconfigurable wireless node sending, to the micro cell served by the reconfigurable wireless node, the RF direct amplification signal of the signal which is on the channel contained in the second radio frame adopts one of the following sending methods:

sending all signals, which are on the second radio frame and are transmitted within the first time interval contained in the first wireless frame period, by an RF direct amplification method;
sending a part of signals, which are on the second radio frame and are transmitted within the first time interval contained in the first radio frame period, by the RF direct amplification method.

14. The method for a reconfigurable wireless node to collaborate with a wireless access point of a macro cell according to claim 10 or 11, **characterized in that** the step of configuring the downlink channel, which is used for communications between the reconfigurable wireless node and the terminal served by the reconfigurable wireless node and located in the micro cell, on the first frequency band or on the first frequency band and the second frequency band comprises:

the reconfigurable wireless node acquiring from a network side an idle time slot location of a radio frame of a wireless access network on the second frequency band; and

the reconfigurable wireless node assigning a time-frequency resource for the terminal served by the reconfigurable wireless node on the first frequency band or on the first frequency band and the second frequency band in the acquired idle time slot.

15. A method for a reconfigurable wireless node to avoid a self-excitation of an RF direct amplification transmission-way, **characterized in that** the method comprises:

a first communication device sending a pseudorandom sequence signal, which is used for measuring an isolation value between a sending antenna and a receiving antenna, based on a preset power value using a first antenna unit on a channel of a first frequency band covered by a Radio Frequency (RF) direct amplification transmission-way or on a second frequency band not used by the RF direct amplification transmission-way; or, the first communication device sending a beacon signal, which accords with a wireless communication technical specification, on a third frequency band based on a power P_out;

a second RF receiving transmission-way unit in a second communication device performing, on the channel of the first frequency band covered by the RF direct amplification transmission-way, low-noise amplification on a pseudorandom sequence received by a second antenna unit and then sending the pseudorandom sequence subjected to the low-noise amplification to a second receiving transmission-way baseband processing unit, the second receiving transmission-way baseband processing unit then performing detection and power measurement on the pseudorandom sequence using an identification number of the first communication device to obtain a measured power P_ind; or, the second RF receiving transmission-way unit in the second communication device performing, on the second frequency band, low-noise amplification on the pseudorandom sequence received by the second antenna unit and then sending the pseudorandom sequence subjected to the low-noise amplification to the second receiving transmission-way baseband processing unit, the second receiving transmission-way baseband processing unit then performing detection and power measurement on the pseudorandom sequence using the identification number of the first communication device to obtain a measured power P_ind; or, the second RF receiving transmission-way unit in the second communication device performing, on the third frequency band, low-noise amplification on the beacon signal received by the second antenna unit and then sending the beacon signal subjected to the low-noise amplification to the second receiving transmission-way baseband processing unit, the second receiving transmission-way baseband processing unit then performing detection and power measurement on the beacon signal using the identification number of the first communication device to obtain a measured power P_ind;

according to the P_out and the P_ind, calculating an isolation value between the first antenna unit of the first communication device and the second antenna unit of the second communication device which are used by the RF direct amplification transmission-way; and

the reconfigurable wireless node controlling a gain of the RF direct amplification transmission-way on the first frequency band to be less than the measured isolation value between the sending antenna and the receiving antenna.

16. The method for a reconfigurable wireless node to avoid a self-excitation of an RF direct amplification transmission-way according to claim 15, **characterized in that** the step of sending the pseudorandom sequence signal, which is used for measuring the isolation value between the sending antenna and the receiving antenna, based on the preset power value using the first antenna unit on the channel of the first frequency band covered by the RF direct amplification transmission-way or on the second frequency band not used by the RF direct amplification transmission-way comprises:

a first sending transmission-way baseband processing unit in the first communication device generating the pseudorandom sequence and performing pre-process of transmission, wherein the pre-process of transmission comprises one or more of the following processes: adding the identification number of the first communication device, up-conversion, power control;

sending the pseudorandom sequence subjected to the pre-process of transmission to a first RF sending transmission-way unit via a first RF signal selection unit; the first RF sending transmission-way unit amplifying an RF direct amplification signal from the second antenna unit of the second communication device and the pseudorandom sequence, and then sending the amplified RF direct amplification signal and the amplified pseudorandom sequence out based on the power P_out on the channel of the first frequency band covered by the RF direct amplification transmission-way via the first antenna unit; or, the first RF sending transmission-way unit amplifying the pseudorandom sequence and then sending the amplified pseudorandom sequence out based on the power P_out on the second frequency band via the first antenna unit.

17. The method for a reconfigurable wireless node to avoid a self-excitation of an RF direct amplification transmission-way according to claim 15 or 16, **characterized in that** the second frequency band not used by the RF direct amplification transmission-way is a frequency band with a frequency lower than that of the first frequency band and with a frequency interval from the first frequency band less than one octave.

18. The method for a reconfigurable wireless node to avoid a self-excitation of an RF direct amplification transmission-way according to claim 15 or 16, **characterized in that** the method further comprises: according to the P_out and the P_ind, calculating the isolation value between the first antenna unit of the first communication device and the second antenna unit of the second communication device which are used by the RF direct amplification transmission-way through a following formula: ISO=10Log (P_ind/P_out),
   wherein ISO represents the isolation value and Log represents logarithm.

Reconfigurable wireless node

Second
communication device

300

200

First communication
device

100

## Fig. 1

100

101

BW1

f1

102

First RF receiving
transmission-way
unit

103

First RF
signal
allocation
unit

104

First receiving transmission-
way baseband processing unit

BW1

f1

107

First
co-axial
cable
interface
unit

106

BWb

fb

First
inter-
face
drive
unit

Operation mode management and control unit

First RF direct
amplification
control sub-
unit

First RF transmission-
way and baseband
processing
configuration sub-unit

Synchron-
ization
control
sub-unit

105

BW2

f2

111

First RF sending
transmission-way
unit

112

First RF
signal
selection unit

113

First sending transmission-way
baseband processing unit

110

108

109

BW2

f2

## Fig. 2

Fig. 3

**Fig. 4**

a reconfigurable wireless node configures a terminal-oriented downlink channel on a first frequency band, and controls a first radio frame which carries the downlink channel to keep time-synchronous with a second radio frame which carries a downlink channel configured by a wireless access point of a macro cell on a second frequency band

01

during a first time interval contained in a first radio frame period of the reconfigurable wireless node, the reconfigurable wireless node transmits to a micro cell served by the reconfigurable wireless node an RF direct amplification signal of a signal on a channel contained in the second radio frame

02

during a second time interval contained in the first radio frame period of the reconfigurable wireless node, the wireless node configures a downlink channel, which is used for communications between the reconfigurable wireless node and a terminal served by the reconfigurable wireless node and located in a micro cell, on the first frequency band or on the first and second frequency bands in an idle time slot of the second radio frame

03

## Fig. 5

503

502

Spectrum
allocation and
management unit

BBU 501

Scheduler unit

500

510

Terminal

Micro cell covered
by a wireless node

Macro cell covered by RRU on a
second frequency band

**Fig. 6**

**Fig. 7**

**Fig. 8**

WCDMA channel bandwidth shared by a macro cell and a micro cell（3.84MHZ）

**Fig. 9 (a)**

First sub-band of frequency band LTE_1    Second sub-band of frequency band LTE_1

LTE channel bandwidth（10MHZ）

**Fig. 9 (b)**

# INTERNATIONAL SEARCH REPORT

| | |
|---|---|
| International application No. | |
| **PCT/CN2011/077328** | |

**Box No. II    Observations where certain claims were found unsearchable (Continuation of item 2 of first sheet)**

This international search report has not been established in respect of certain claims under Article 17(2)(a) for the following reasons:

1. ☐  Claims Nos.:
    because they relate to subject matter not required to be searched by this Authority, namely:

2. ☐  Claims Nos.:
    because they relate to parts of the international application that do not comply with the prescribed requirements to such an extent that no meaningful international search can be carried out, specifically:

3. ☐  Claims Nos.:
    because they are dependent claims and are not drafted in accordance with the second and third sentences of Rule 6.4(a).

**Box No. III   Observations where unity of invention is lacking (Continuation of item 3 of first sheet)**

This International Searching Authority found multiple inventions in this international application, as follows:

I: Claim 1 relates to: a reconfigurable wireless node;

II: Claim 10 relates to: a method for a reconfigurable wireless node to work in coordination with a macro cell wireless access point;

III: Claim 15 relates to: a method for a reconfigurable wireless node to avoid radio frequency direct amplification channel self-excitation;

The three groups of claims share a unique identical technical feature "reconfigurable wireless node", however, this feature is well-known in the art; the first group and the second group also share the identical technical feature "radio frequency direct amplification", but this feature is also well-known in the art, and the other technical features respectively contained in the three groups of claims are neither the same nor corresponding to each other. Therefore, these three groups of claims do not contain the same or corresponding specific technical features, and these inventions are not so linked as to form a single inventive concept and therefore do not meet the requirement of PCT Rule 13.1.

1. ☐  As all required additional search fees were timely paid by the applicant, this international search report covers all searchable claims.

2. ☒  As all searchable claims could be searched without effort justifying additional fees, this Authority did not invite payment of additional fees.

3. ☐  As only some of the required additional search fees were timely paid by the applicant, this international search report covers only those claims for which fees were paid, specifically claims Nos.:

4. ☐  No required additional search fees were timely paid by the applicant. Consequently, this international search report is restricted to the invention first mentioned in the claims; it is covered by claims Nos.:

**Remark on protest**        ☐    The additional search fees were accompanied by the applicant's protest and, where applicable, the payment of a protest fee.

☐    The additional search fees were accompanied by the applicant's protest but the applicable protest fee was not paid within the time limit specified in the invitation.

☐    No protest accompanied the payment of additional search fees.

Form PCT/ISA/210 (continuation of first sheet (2)) (July 2009)

# INTERNATIONAL SEARCH REPORT

| | International application No. |
|---|---|
| | **PCT/CN2011/077328** |

**A. CLASSIFICATION OF SUBJECT MATTER**

H04W 16/32 (2009.01) i

According to International Patent Classification (IPC) or to both national classification and IPC

**B. FIELDS SEARCHED**

Minimum documentation searched (classification system followed by classification symbols)

IPC: H04L; H04W; H04Q

Documentation searched other than minimum documentation to the extent that such documents are included in the fields searched

Electronic data base consulted during the international search (name of data base and, where practicable, search terms used)

CPRSABS; CNTXT; CNKI; VEN: set, direct amplification, layered, double layer, antenna, degree of isolation, relay, repeater, home nodeb, radio frequency, configuration, synchronize

**C. DOCUMENTS CONSIDERED TO BE RELEVANT**

| Category* | Citation of document, with indication, where appropriate, of the relevant passages | Relevant to claim No. |
|---|---|---|
| X | CN 101719782A (SUNWAVE COMMUNICATIONS CO., LTD.) 02 June 2010 (02.06.2010) page 3, line 5 to page 4, line 9 of the description, and figure 1 | 1, 5 |
| A | the whole document | 2-4, 6-18 |
| X | CN 101729123A (ZTE CORPORATION) 09 June 2010 (09.06.2010) page 5, line 3 to page 13, line 38 of the description | 10-14 |
| A | the whole document | 1-9, 15-18 |
| X | CN 1368828A (WUHAN RESEARCH INSTITUTE OF POSTS AND TELECOMMUNICATIONS) 11 September 2002 (11.09.2002) page 2, line 2 to page 5, line 23 of the description, and figures 3 and 4 | 15-18 |
| A | the whole document | 1-14 |

☒ Further documents are listed in the continuation of Box C.     ☒ See patent family annex.

| *   Special categories of cited documents: | "T"   later document published after the international filing date or priority date and not in conflict with the application but cited to understand the principle or theory underlying the invention |
|---|---|
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 08 September 20 11 (08.09.2011) | **27 October 2011 (27.10.2011)** |

| Name and mailing address of the ISA/CN: State Intellectual Property Office of the P. R. China No. 6, Xitucheng Road, Jimenqiao, Haidian District, Beijing 100088, China Fax No. (86-10) 62019451 | Authorized officer GAO, Lijun Telephone No. (86-10) **62411224** |
|---|---|

Form PCT/ISA /210 (second sheet) (July 2009)

## INTERNATIONAL SEARCH REPORT

International application No.

**PCT/CN2011/077328**

C (Continuation).　　DOCUMENTS CONSIDERED TO BE RELEVANT

| Category* | Citation of document, with indication, where appropriate, of the relevant passages | Relevant to claim No. |
|---|---|---|
| X | US2009285147A1 (REDLINE COMMUNICATIONS INC.) 19 November 2009 (19.11.2009) paragraphs 21-36 of the description | 15-18 |
| A | the whole document | 1-14 |
| A | US2008137561A1 (ELECTRONICS&TELECOM RES INST et al.) 12 June 2008 (12.06.2008) the whole document | 1-18 |

Form PCT/ISA /210 (continuation of second sheet ) (July 2009)

# INTERNATIONAL SEARCH REPORT
## Information on patent family members

| | International application No. |
|---|---|
| | **PCT/CN2011/077328** |

| Patent Documents referred in the Report | Publication Date | Patent Family | Publication Date |
|---|---|---|---|
| CN101719782A | 02.06.2010 | None | |
| CN101729123A | 09.06.2010 | None | |
| CN1368828A | 11.09.2002 | CN1152587C | 02.06.2004 |
| US2009285147A1 | 19.11.2009 | CA 2631441A1 | 16.11.2009 |
| US2008137561A1 | 12.06.2008 | KR100890634B1 | 27.03.2009 |
| | | KR20080052241A | 11.06.2008 |

Form PCT/ISA /210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 200620137568
- CN 200920137896
- US 20040185777 A1
- CN 00816660
- CN 01811437
- CN 200610124325